# EUROPEAN PATENT APPLICATION

(11) **EP 4 651 430 A1**
(43) Date of publication of application: **19.11.2025**
(21) Application number: 24744296.5
(22) Date of filing: 17.01.2024
(51) Int. Cl.: H04L 9/32

(54) **METHOD AND APPARATUS FOR COMMUNICATION, STORAGE MEDIUM, AND PROGRAM PRODUCT**

(30) Priority: 20.01.2023 CN 202310125228
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); LI, He, Shenzhen, Guangdong 518129 (CN)
(74) Representative: Epping - Hermann - Fischer
(86) International application number: PCT/CN2024/072747
(87) International publication number: WO 2024/153121

(57) **Abstract**

Embodiments of the present disclosure provide a communication method, an apparatus, a computer-readable storage medium, and a computer program product. The method is used in a process of establishing a relay communication connection. When a relay communication security link is established by using control plane signaling, a remote communication apparatus obtains a serving network identifier of a relay communication apparatus. The remote communication apparatus obtains an authentication request message from the relay communication apparatus, where the authentication request message includes network name information. The remote communication apparatus compares the network name information with the serving network identifier, and determines, based on a result of the comparison, whether to perform a subsequent authentication procedure. This avoids a security risk caused by the relay communication apparatus because the relay communication apparatus provides a serving network identifier inconsistent with the network name information in the authentication request message.

## Description

### TECHNICAL FIELD

The present disclosure generally relates to the telecommunication field, and more specifically, to a communication method, an apparatus, a computer-readable storage medium, and a computer program product.

### BACKGROUND

With rapid development of mobile communication, new service types, for example, data services such as video chat and VR/AR, are widely used, which increases user's requirements for bandwidth. Device-to-device (device-to-device, D2D) communication allows terminal apparatuses (terminal devices, TDs) to directly communicate with each other and share spectrum resources with cell users under control of a cell network, effectively improving utilization of the spectrum resources. In the D2D communication, the communication between TDs are via a PC5 interface, which is referred to as a sidelink (sidelink, SL), for example, in a proximity-based services (proximity-based services, ProSe) manner.

When a terminal accesses a network, in a network relay communication scenario, that is, when a remote communication apparatus accesses the network through a relay communication apparatus, authentication needs to be performed, for example, by using an extensible authentication protocol-authentication and key agreement (extensible authentication protocol-authentication and key agreement, EAP-AKA') procedure. After the authentication succeeds, the remote communication apparatus accesses the network through the relay communication apparatus.

### SUMMARY

This application provides an authentication solution for establishing a relay communication connection. Authentication may be performed by obtaining a serving network identifier of a relay communication apparatus and comparing the serving network identifier with network name information in authentication request information.

According to a first aspect, a communication method is provided. The method may be performed by a remote communication apparatus, or may be performed by a chip used in the remote communication apparatus. The following provides descriptions by using an example in which the method is performed by the remote communication apparatus. In the method, in a process of establishing a relay communication connection, when a relay communication security link is established by using control plane signaling, the remote communication apparatus obtains a serving network identifier of a relay communication apparatus. The remote communication apparatus obtains authentication request information from the relay communication apparatus. The authentication request information includes network name information. When determining that the serving network identifier is the same as the network name information, the remote communication apparatus sends an authentication response message in response to the authentication request message to the relay communication apparatus. The authentication response message is used to authenticate the remote communication apparatus. Therefore, an identity of the relay communication apparatus is determined by comparing the serving network identifier of the relay communication apparatus with the network name information in the authentication request information, to complete an authentication procedure. This avoids a security risk caused by the relay communication apparatus because the relay communication apparatus provides a serving network identifier inconsistent with the network name information in the authentication request message.

In some implementations, before obtaining the serving network identifier, the remote communication apparatus determines to request the serving network identifier from the relay communication apparatus; and the remote communication apparatus sends a request message for the serving network identifier to the relay communication apparatus. Therefore, the serving network identifier of the relay communication apparatus is accurately obtained, to complete the authentication procedure. This avoids the security risk caused by the relay communication apparatus because the relay communication apparatus provides the serving network identifier that is inconsistent with the network name information in the authentication request message.

In some implementations, that the remote communication apparatus obtains a serving network identifier includes: The remote communication apparatus receives a response message for the request message from the relay communication apparatus. The response message includes the serving network identifier. Therefore, the serving network identifier of the relay communication apparatus is accurately obtained, to complete the authentication procedure. This avoids the security risk caused by the relay communication apparatus because the relay communication apparatus provides the serving network identifier inconsistent with the network name information in the authentication request message.

In some implementations, that the remote communication apparatus sends the request message includes: The remote communication apparatus sends a discovery request message in a proximity-based services discovery procedure model B to the relay communication apparatus. The discovery request message includes indication information used to request the serving network identifier. That the remote communication apparatus sends the request message further includes: The remote communication apparatus sends an additional parameters announcement request message to the relay communication apparatus. The additional parameters announcement request message includes indication information used to request the serving network identifier. Therefore, the request message may be implemented in different manners, to ensure implementation flexibility. In some implementations, the response message includes a response message defined for responding to the request message. The response message further includes a discovery response message in a proximity-based services discovery procedure model B. The response message further includes a relay discovery additional information message. Therefore, the response message may be implemented in different manners, to ensure the implementation flexibility.

In some implementations, that the remote communication apparatus determines to request the serving network identifier from the relay communication apparatus includes: The remote communication apparatus determines, based on the authentication request information received from the relay communication apparatus, to request the serving network identifier. This facilitates a subsequent authentication process, and avoids the security risk caused by the relay communication apparatus because the relay communication apparatus provides the serving network identifier inconsistent with the network name information in the authentication request message.

In some implementations, that the remote communication apparatus determines to request the serving network identifier is further based on: The remote communication apparatus determines to compare whether the serving network identifier is the same as the network name information. That the remote communication apparatus determines to request the serving network identifier is further based on: The remote communication apparatus determines to establish the relay communication security link by using the control plane signaling. Therefore, determining to request the serving network identifier is implemented in different manners, to ensure flexibility.

In some implementations, that the remote communication apparatus receives the serving network identifier includes: The remote communication apparatus receives, from the relay communication apparatus, a message defined for sending the serving network identifier. The message includes the serving network identifier. That the remote communication apparatus receives the serving network identifier further includes: When the remote communication apparatus and the relay communication apparatus use a proximity-based services discovery procedure model A, the remote communication apparatus receives a discovery announcement message from the relay communication apparatus. The discovery announcement message includes the serving network identifier. That the remote communication apparatus receives the serving network identifier further includes: When the remote communication apparatus and the relay communication apparatus use a proximity-based services discovery procedure model B, the remote communication apparatus receives a discovery response message from the relay communication apparatus. The discovery response message includes the serving network identifier. That the remote communication apparatus receives the serving network identifier further includes: The remote communication apparatus receives a relay discovery additional information message from the relay communication apparatus. The relay discovery additional information message includes the serving network identifier. Therefore, the serving network identifier is received in different manners, to ensure flexibility.

In some implementations, the serving network identifier in the relay discovery additional information message includes a new radio cell global identifier NCGI. Therefore, the serving network identifier is uniquely and accurately identified, to ensure authentication accuracy.

In some implementations, the serving network identifier includes a public land mobile network identifier PLMN ID of a serving network of the relay communication apparatus. Therefore, a public land mobile network is used to accurately identify the serving network identifier, to ensure the authentication accuracy.

According to a second aspect, a communication method is provided. The method may be performed by a relay communication apparatus, or may be performed by a chip used in the relay communication apparatus. The following provides descriptions by using an example in which the method is performed by the relay communication apparatus. In the method, in a process of establishing a relay communication connection, when a relay communication security link is established by using control plane signaling, the relay communication apparatus sends a serving network identifier of the relay communication apparatus to a remote communication apparatus. The relay communication apparatus sends, to the remote communication apparatus, authentication request information from a network. The authentication request information includes network name information. The relay communication apparatus further receives an authentication response message from the remote communication apparatus. The authentication response message is used to authenticate the remote communication apparatus. Therefore, an identity of the relay communication apparatus is determined by comparing the serving network identifier of the relay communication apparatus with the network name information in the authentication request information, to complete an authentication procedure. This avoids a security risk caused by the relay communication apparatus because the relay communication apparatus provides a serving network identifier inconsistent with the network name information in the authentication request message.

In some implementations, that the relay communication apparatus sends a serving network identifier includes: The relay communication apparatus sends, based on a request message for the serving network identifier received from the remote communication apparatus, a response message for the request message to the remote communication apparatus. The response message includes the serving network identifier, to complete the authentication procedure. This avoids the security risk caused by the relay communication apparatus because the relay communication apparatus provides the serving network identifier inconsistent with the network name information in the authentication request message.

In some implementations, the request message includes a discovery request message in a proximity-based services discovery procedure model B. The discovery request message includes indication information used to request the serving network identifier. The request message further includes an additional parameters announcement request message. The additional parameters announcement request message includes indication information used to request the serving network identifier. Therefore, the request message is implemented in different manners, to ensure flexibility.

In some implementations, the response message includes a response message defined for responding to the request message. The response message further includes a discovery response message in the proximity-based services discovery procedure model B. The response message further includes a relay discovery additional information message. Therefore, the response message is implemented in a plurality of manners, to ensure flexibility.

In some implementations, before sending the serving network identifier, the relay communication apparatus determines, based on the relay communication security link established by using the control plane signaling, to send the serving network identifier to the remote communication apparatus, to complete the authentication procedure. This avoids the security risk caused by the relay communication apparatus because the relay communication apparatus provides the serving network identifier inconsistent with the network name information in the authentication request message.

In some implementations, that the relay communication apparatus sends a serving network identifier includes: The relay communication apparatus sends, to the remote communication apparatus, a message defined for sending the serving network identifier. The message includes the serving network identifier. That the relay communication apparatus sends a serving network identifier further includes: When the remote communication apparatus and the relay communication apparatus use a proximity-based services discovery procedure model A, the relay communication apparatus broadcasts a discovery message. The discovery message includes the serving network identifier. That the relay communication apparatus sends a serving network identifier further includes: When the remote communication apparatus and the relay communication apparatus use a proximity-based services discovery procedure model B, the relay communication apparatus sends a discovery response message to the remote communication apparatus. The discovery response message includes the serving network identifier. That the relay communication apparatus sends a serving network identifier further includes: The relay communication apparatus sends a relay discovery additional information message to the remote communication apparatus. The relay discovery additional information includes the serving network identifier.

In some implementations, the serving network identifier in the relay discovery additional information message includes a new radio cell global identifier NCGI. Therefore, the serving network identifier is uniquely and accurately identified, to ensure authentication accuracy.

In some implementations, the serving network identifier includes a public land mobile network identifier PLMN ID of a serving network of the relay communication apparatus. Therefore, a public land mobile network is used to accurately identify the serving network identifier, to ensure the authentication accuracy.

According to a third aspect, a communication method is provided. The method may be performed by a communication apparatus, or may be performed by a chip used in the communication apparatus. The following provides descriptions by using an example in which the method is performed by the communication apparatus. The communication apparatus may be a remote communication apparatus or a relay communication apparatus in relay communication. In the method, in a process of establishing a relay communication connection, the communication apparatus obtains a relay service identifier and a serving network identifier corresponding to the relay service identifier. When the communication apparatus determines, based on the relay service identifier, that a relay communication security link needs to be established by using control plane signaling, the communication apparatus establishes the security link by using the serving network identifier. In this way, both the remote communication apparatus and the relay communication apparatus may obtain, from a network device, the relay service identifier and the serving network identifier corresponding to the relay service identifier, to implement authentication between the remote communication apparatus and the relay communication apparatus.

In some implementations, that the communication apparatus obtains a relay service identifier and a serving network identifier corresponding to the relay service identifier includes: The communication apparatus obtains, from a network device, the relay service identifier and the serving network identifier corresponding to the relay service identifier, to complete an authentication procedure. This avoids a security risk caused by the relay communication apparatus because the relay communication apparatus provides a serving network identifier inconsistent with network name information in an authentication request message.

In some implementations, the communication apparatus includes a remote communication apparatus or a relay communication apparatus in ProSe communication, to complete the authentication procedure. This avoids the security risk caused by the relay communication apparatus because the relay communication apparatus provides the serving network identifier inconsistent with the network name information in the authentication request message. According to a fourth aspect, a communication method is provided. The method may be performed by a network device, or may be performed by a chip used in the network device. The following provides descriptions by using an example in which the method is performed by the network device. In the method, in a process of establishing a relay communication connection, a first network device determines, based on a relay service identifier associated with a communication apparatus, a serving network identifier corresponding to the relay service identifier. The first network device sends the relay service identifier and the serving network identifier to a second network device, to enable the second network device to send the relay service identifier and the serving network identifier to the communication apparatus. In this way, the network device may send the relay service identifier and the serving network identifier corresponding to the relay service identifier to the communication apparatus such as the remote communication apparatus and the relay communication apparatus, to implement authentication between the remote communication apparatus and the relay communication apparatus.

In some implementations, the first network device includes a policy control function PCF device, and the second network device includes an access and mobility management AMF device. Therefore, the network device pushes the serving network identifier to a terminal device, to complete an authentication procedure.

In some implementations, the first network device obtains service specific information in subscription information of the communication apparatus from a network storage device. The service specific information includes the serving network identifier. Therefore, the serving network identifier is accurately obtained, to complete the authentication procedure.

In some implementations, the network storage device includes a unified data management UDM device. Therefore, the serving network identifier is accurately obtained, to complete the authentication procedure.

According to a fifth aspect, a communication method is provided. The method may be performed by a remote communication apparatus, or may be performed by a chip used in the remote communication apparatus. The following provides descriptions by using an example in which the method is performed by the remote communication apparatus. In the method, in a process of establishing a relay communication connection, when the remote communication apparatus establishes a relay communication security link by using control plane signaling, the remote communication apparatus determines not to obtain a serving network identifier of a relay communication apparatus. The remote communication apparatus obtains authentication request information from the relay communication apparatus. The authentication request information includes network name information. The remote communication apparatus sends an authentication response message in response to the authentication request message to the relay communication apparatus. The authentication response message is used to authenticate the remote communication apparatus. In this way, authentication may be directly passed without comparing the serving network identifier of the relay communication apparatus with the network name information, so that the remote communication apparatus is slightly modified, and good compatibility is maintained.

According to a sixth aspect, a remote communication apparatus is provided, and is used in a process of establishing a relay communication connection. The remote communication apparatus includes: a first obtaining module, configured to: when a relay communication security link is established by using control plane signaling, obtain a serving network identifier of a relay communication apparatus; a second obtaining module, configured to obtain authentication request information from the relay communication apparatus, where the authentication request information includes network name information; and a sending module, configured to: when determining that the serving network identifier is the same as the network name information, send an authentication response message in response to the authentication request message to the relay communication apparatus, where the authentication response message is used to authenticate the remote communication apparatus. Therefore, an identity of the relay communication apparatus is determined by comparing the serving network identifier of the relay communication apparatus with the network name information in the authentication request information, to complete an authentication procedure, and avoid a security risk caused by the relay communication apparatus. According to a seventh aspect, a relay communication apparatus is provided, and is used in a process of establishing a relay communication connection. The relay communication apparatus includes: a first sending module, configured to: when a relay communication security link is established by using control plane signaling, send a serving network identifier of the relay communication apparatus to a remote communication apparatus; a second sending module, configured to send, to the remote communication apparatus, authentication request information from a network, where the authentication request information includes network name information; and a receiving module, configured to receive an authentication response message from the remote communication apparatus, where the authentication response message is used to authenticate the remote communication apparatus.

According to an eighth aspect, a communication apparatus is provided, and is used in a process of establishing a relay communication connection. The communication apparatus includes: an obtaining module, configured to obtain a relay service identifier and a serving network identifier corresponding to the relay service identifier; and a security link establishment module, configured to: when determining, based on the relay service identifier, that a relay communication security link needs to be established by using control plane signaling, establish the security link by using the serving network identifier. Therefore, an identity of the relay communication apparatus is determined by comparing the serving network identifier of the relay communication apparatus with network name information in authentication request information, to complete an authentication procedure, and avoid a security risk caused by the relay communication apparatus. According to a ninth aspect, a network is provided, and is used in a process of establishing a relay communication connection. The network includes a first network device and a second network device. The first network device determines, based on a relay service identifier associated with a communication apparatus, a serving network identifier corresponding to the relay service identifier; and the first network device sends the relay service identifier and the serving network identifier to the second network device, to enable the second network device to send the relay service identifier and the serving network identifier to the communication apparatus. In this way, a network device may send the relay service identifier and the serving network identifier corresponding to the relay service identifier to the communication apparatus such as a remote communication apparatus and a relay communication apparatus, to implement authentication between the remote communication apparatus and the relay communication apparatus.

According to a tenth aspect, a remote communication apparatus is provided, and is used in a process of establishing a relay communication connection. The remote communication apparatus includes: a determining module, configured to: when a relay communication security link is established by using control plane signaling, determine not to obtain a serving network identifier of a relay communication apparatus; an obtaining module, configured to obtain authentication request information from the relay communication apparatus, where the authentication request information includes network name information; and a sending module, configured to send an authentication response message in response to the authentication request message to the relay communication apparatus, where the authentication response message is used to authenticate the remote communication apparatus. In this way, authentication may be directly passed without comparing the serving network identifier of the relay communication apparatus with the network name information, so that the remote communication apparatus is slightly modified, and good compatibility is maintained.

According to an eleventh aspect, this application provides a computer-readable storage medium. The computer-readable storage medium stores a computer program. When the computer program is run, the methods performed by the remote communication apparatus, the relay terminal apparatus, the terminal apparatus, and the network device in the foregoing aspects are implemented. According to a twelfth aspect, a computer program product is provided. The computer program product includes computer program code. When the computer program code is run, the methods performed by the remote communication apparatus, the relay terminal apparatus, the terminal apparatus, and the network device in the foregoing aspects are performed.

### BRIEF DESCRIPTION OF DRAWINGS

FIG. 1A shows a communication scenario in which an embodiment of this application may be implemented;
FIG. 1B shows a communication scenario in which another embodiment of this application may be implemented;
FIG. 1C is a schematic flowchart of establishment of proximity-based services terminal-to-network relay communication according to an embodiment of this application;
FIG. 1D is a schematic flowchart of a proximity-based services discovery according to an embodiment of this application;
FIG. 1E-1 and FIG. 1E-2 are a schematic flowchart of establishing a PC5 security key between a remote communication apparatus and a relay communication apparatus based on a control plane solution according to an embodiment of this application;
FIG. 1F is a schematic flowchart of EAP-AKA' according to an embodiment of this application;
FIG. 1G is a diagram of a layer 2 protocol stack used for remote communication apparatus-to-network relay communication according to an embodiment of this application;
FIG. 1H is a diagram of a layer 3 protocol stack used for remote communication apparatus-to-network relay communication according to an embodiment of this application;
FIG. 1I is a diagram of a layer 3 protocol stack used for remote communication apparatus-to-network relay plus N3IWF mechanism communication according to an embodiment of this application;
FIG. 2A is a schematic flowchart in which a remote communication apparatus authenticates a relay communication apparatus according to an embodiment of this application;
FIG. 2B is a schematic flowchart in which a network device sends a relay service identifier and a serving network identifier to a communication apparatus according to an embodiment of this application;
FIG. 2C is a schematic flowchart in which a remote communication apparatus performs authentication without obtaining a serving network identifier of a relay communication apparatus according to an embodiment of this application;
FIG. 3 is a schematic flowchart in which a remote communication apparatus obtains a serving network identifier of a relay communication apparatus for authentication according to an embodiment of this application;
FIG. 4 is a schematic flowchart in which a remote communication apparatus obtains a serving network identifier of a relay communication apparatus for authentication according to another embodiment of this application;
FIG. 5 is a schematic flowchart in which a relay communication apparatus sends a serving network identifier to a remote communication apparatus for authentication according to an embodiment of this application;
FIG. 6 is a schematic flowchart in which a network device configures a serving network identifier for a communication apparatus to perform authentication according to an embodiment of this application;
FIG. 7 is a flowchart of a communication method implemented at a remote communication apparatus according to an embodiment of this application;
FIG. 8 is a flowchart of a communication method implemented at a relay communication apparatus according to an embodiment of this application;
FIG. 9 is a flowchart of a communication method implemented at a communication apparatus according to an embodiment of this application;
FIG. 10 is a flowchart of a communication method implemented at a network device according to an embodiment of this application;
FIG. 11 is a flowchart of a communication method implemented at a remote communication apparatus according to an embodiment of this application;
FIG. 12 is a simplified block diagram of an example device in a possible implementation according to an embodiment of this application;
FIG. 13 is a simplified block diagram of a communication apparatus in a possible implementation according to an embodiment of this application; and
FIG. 14 is a simplified block diagram of a network device in a possible implementation according to an embodiment of this application.

### DESCRIPTION OF EMBODIMENTS

To make objectives, technical solutions, and advantages of this application clearer, the following further describes this application in detail with reference to the accompanying drawings. Specific operation methods, function descriptions, and the like in method embodiments may also be applied to apparatus embodiments or system embodiments.

As described above, when a D2D communication terminal accesses a network, authentication needs to be performed. For example, an extensible authentication protocol-authentication and key agreement (extensible authentication protocol-authentication and key agreement, EAP-AKA') procedure is used. In a network relay communication scenario, to be specific, when a remote communication apparatus accesses the network by using a relay communication apparatus, the relay communication apparatus does not broadcast serving network identifier (service network name, SNN) information of the relay communication apparatus, causing an authentication procedure failure.

In view of this, an embodiment disclosed in this application provides a communication method for a relay communication connection. In the method, in a process of establishing the relay communication connection, when a relay communication security link is established by using control plane signaling, the remote communication apparatus obtains a serving network identifier of the relay communication apparatus. The remote communication apparatus obtains authentication request information from the relay communication apparatus. The authentication request information includes network name information. When determining that the serving network identifier is the same as the network name information, the remote communication apparatus sends an authentication response message in response to the authentication request message to the relay communication apparatus. The authentication response message is used to authenticate the remote communication apparatus. Therefore, an identity of a relay terminal device is determined by comparing the serving network identifier of the relay communication apparatus with the network name information in the authentication request information, to complete an authentication procedure. This avoids a security risk caused by the relay communication apparatus because the relay communication apparatus provides a serving network identifier inconsistent with the network name information in the authentication request message.

An embodiment disclosed in this application further provides a communication method for a relay communication connection. In the method, in a process of establishing the relay communication connection, when the relay communication security link is established by using control plane signaling, a relay communication apparatus sends a serving network identifier of the relay communication apparatus to a remote communication apparatus. The relay communication apparatus sends, to the remote communication apparatus, authentication request information from a network. The authentication request information includes network name information. The relay communication apparatus further receives an authentication response message from the remote communication apparatus. The authentication response message is used to authenticate the remote communication apparatus. Therefore, an identity of the relay communication apparatus is determined by comparing the serving network identifier of the relay communication apparatus with the network name information in the authentication request information, to complete an authentication procedure. This avoids a security risk caused by the relay communication apparatus because the relay communication apparatus provides a serving network identifier inconsistent with the network name information in the authentication request message.

An embodiment disclosed in this application further provides a communication method for a relay communication connection. In the method, a communication apparatus obtains a relay service identifier and a serving network identifier corresponding to the relay service identifier. When the communication apparatus determines, based on the relay service identifier, that a relay communication security link needs to be established by using control plane signaling, the communication apparatus establishes the security link by using the serving network identifier. In this way, both a remote communication apparatus and a relay communication apparatus may obtain, from a network device, the relay service identifier and the serving network identifier corresponding to the relay service identifier, to implement authentication between the remote communication apparatus and the relay communication apparatus.

An embodiment disclosed in this application further provides a communication method for a relay communication connection. In the method, a first network device determines, based on a relay service identifier associated with a communication apparatus, a serving network identifier corresponding to the relay service identifier. The first network device sends the relay service identifier and the serving network identifier to a second network device, to enable the second network device to send the relay service identifier and the serving network identifier to the communication apparatus. In this way, a network device may send the relay service identifier and the serving network identifier corresponding to the relay service identifier to the communication apparatus such as a remote communication apparatus and a relay communication apparatus, to implement authentication between the remote communication apparatus and the relay communication apparatus.

An embodiment disclosed in this application further provides a communication method for a relay communication connection. In the method, when a remote communication apparatus establishes a relay communication security link by using control plane signaling, the remote communication apparatus determines not to obtain a serving network identifier of a relay communication apparatus. The remote communication apparatus obtains authentication request information from the relay communication apparatus. The authentication request information includes network name information. The remote communication apparatus sends an authentication response message in response to the authentication request message to the relay communication apparatus. The authentication response message is used to authenticate the remote communication apparatus. In this way, authentication may be directly passed without comparing the serving network identifier of the relay communication apparatus with the network name information, so that the remote communication apparatus is slightly modified, and good compatibility is maintained.

To facilitate understanding of the technical solutions in embodiments of this application, the following briefly describes conventional technologies in this application.

A 5th generation mobile communication system is referred to as a 5G system (5G system, 5GS) for short, and includes an access network (access network, AN) and a core network (core network, CN), and may further include a terminal.

The terminal may be a terminal having receiving and sending functions, or may be a chip or a chip system that may be disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, mobile equipment, a user terminal, a terminal, a wireless communication device, a user agent, a user apparatus, or the like. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer with a wireless transceiver function, a virtual reality (virtual reality, VR) terminal, an augmented reality (augmented reality, AR) terminal, a wireless terminal in industrial control (industrial control), a wireless terminal in self driving (self driving), an uncrewed aerial vehicle (uncrewed aerial vehicle), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a vehicle-mounted device, a road side unit (road side unit, RSU) with a terminal function, a wearable device, a multimedia device, a streaming media device, or the like. Alternatively, the terminal in this application may be a vehicle-mounted module, a vehicle-mounted subassembly, a vehicle-mounted component, a vehicle-mounted chip, or a vehicle-mounted unit that is built in a vehicle as one or more components or units.

The AN is configured to implement an access-related function, may provide a network access function for an authorized user in a specific area, and can determine transmission links of different quality based on a user level, a service requirement, and the like, to transmit user data. The AN forwards a control signal and the user data between the terminal and the CN. The AN may include an access network device, or may be referred to as a radio access network (radio access network, RAN) device. The CN is responsible for maintaining subscription data of a mobile network, and providing functions such as session management, mobility management, policy management, and security authentication for the terminal. The CN mainly includes the following: a user plane function (user plane function, UPF), an authentication server function (authentication server function, AUSF), an access and mobility management function (access and mobility management function, AMF), a session management function (session management function, SMF), a network slice selection function (network slice selection function, NSSF), a network exposure function (network exposure function, NEF), a network repository function (network repository function, NRF), a policy control function (policy control function, PCF), a unified data management (unified data management, UDM), a unified data repository (unified data repository, UDR), and an application function (application function, AF).

The UE accesses a 5G network by using the RAN device, and the UE communicates with the AMF through an N1 interface (N1 for short). The RAN communicates with the AMF through an N2 interface (N2 for short). The RAN communicates with the UPF through an N3 interface (N3 for short). The SMF communicates with the UPF through an N4 interface (N4 for short), and the UPF accesses a data network (data network, DN) through an N6 interface (N6 for short). In addition, control plane functions such as the AUSF, the AMF, the SMF, the NSSF, the NEF, the NRF, the PCF, the UDM, the UDR, or the AF interact with each other through service-oriented interfaces. For example, a service-oriented interface exhibited by the AUSF includes Nausf, a service-oriented interface exhibited by the AMF includes Namf, a service-oriented interface exhibited by the SMF includes Nsmf, a service-oriented interface exhibited by the NSSF includes Nnssf, a service-oriented interface exhibited by the NEF includes Nnef, a service-oriented interface exhibited by the NRF includes Nnrf, a service-oriented interface exhibited by the PCF includes Npcf, a service-oriented interface exhibited by the UDM includes Nudm, a service-oriented interface exhibited by the UDR includes Nudr, and a service-oriented interface exhibited by the AF includes Naf.

The RAN device may be a device that provides access for the UE. For example, the RAN device may include a next-generation mobile communication system, for example, a 6G access network device, such as a 6G base station. Alternatively, in the next-generation mobile communication system, the network device may be named in another manner, and the another naming manner falls within the protection scope of embodiments of this application. This is not limited in this application. Alternatively, the RAN device may include a gNB in a 5G system, for example, a new radio (new radio, NR) system, or one antenna panel or a group of antenna panels (including a plurality of antenna panels) of a base station in the 5G system, or may be a network node that forms a gNB, a transmission point (transmission and reception point, TRP, or transmission point, TP), or a transmission measurement function (transmission measurement function, TMF), for example, a baseband unit (baseband unit, BBU), a central unit (central unit, CU), a distributed unit (distributed unit, DU), an RSU having a base station function, a wired access gateway, or a 5G core network. Alternatively, the RAN device may include an access point (access point, AP) in a wireless fidelity (wireless fidelity, Wi-Fi) system, a wireless relay node, a wireless backhaul node, macro base stations in various forms, a micro base station (also referred to as a small station), a relay station, an access point, a wearable device, a vehicle-mounted device, or the like.

The UPF is mainly responsible for user data processing (including forwarding, receiving, charging, and the like). For example, the UPF may receive user data from the data network (data network, DN), and forward the user data to the UE by using the access network device. The UPF may alternatively receive user data from the UE by using the access network device, and forward the user data to the DN. The DN is an operator network that provides a data transmission service for a user, for example, an internet protocol (internet protocol, IP) multimedia service (IP multimedia service, IMS), and the internet (internet). The DN may be an external network of an operator, or may be a network controlled by an operator, and is configured to provide a service for the UE. In a protocol data unit (protocol data unit, PDU) session, a UPF that is directly connected to the DN through the N6 is also called a protocol data unit session anchor (protocol data unit session anchor, PSA).

The AUSF is mainly configured to perform UE security authentication.

The AMF is mainly used for mobility management in the mobile network, for example, user location update, user network registration, and user handover.

The SMF is mainly used for session management in the mobile network, for example, session establishment, modification, and release. A specific function is, for example, allocating an internet protocol (internet protocol, IP) address to a user, or selecting a UPF that provides a data packet forwarding function.

The PCF mainly supports providing a unified policy framework to control network behavior, and providing a policy rule for a control layer network function, and is also responsible for obtaining policy-decision-related subscription information of a user. The PCF may provide policies, such as a quality of service (quality of service, QoS) policy and a slice selection policy, for the AMF, the SMF, and the like. In some embodiments, the PCF may be a policy used by UE having a proximity-based services (proximity services, ProSe) function to provide a ProSe service, or the PCF may be a policy used by UE having a ranging/location service function to provide a ranging/location service.

The NSSF is mainly configured to select a network slice for the UE.

The NEF is mainly configured to support capability and event exposure. For example, the NEF may open some capabilities of the 5G network to a third-party application through an application programming interface (application programming interface, API), and the third-party application invokes, through the AF, an API provided by the NEF to obtain some capabilities of the 5G network, so that the third-party application can control some pieces of behavior of the 5G network and the UE.

The UDM is mainly configured to store user data, for example, subscription data and authentication/authorization data.

The UDR is mainly configured to store structured data, and stored content may include subscription data and policy data, externally exposed structured data, application-related data, and the like.

The AF mainly supports interacting with the CN to provide a service, for example, a service that affects a data routing decision or a policy control function, or some third-party services provided for a network side.

It may be understood that a function mentioned in embodiments of this application may also be represented as a functional network element or a functional entity. For example, the UPF may be represented as a UPF network element, the AMF may be represented as an AMF network element, the SMF may be represented as an SMF network element, the PCF may be represented as a PCF network element, and so on. This is not limited.

Near field communication: With rapid development of mobile communication, universal use of new service types, for example, data services such as video chat, virtual reality (virtual reality, VR), and augmented reality (augmented reality, AR), increases a bandwidth requirement of a user. For this, near field communication, such as device-to-device (device-to-device, D2D) communication, is a solution.

The D2D communication allows direct communication between UE, for example, communication through a PC5 interface (a link directly connected by the UE through the PC5 interface is also referred to as a sidelink (sidelink, SL)), so that information can be transmitted on a data plane and a control plane. In this way, under control of a cell (cell) network, the user can share spectrum resources with other cell users, to effectively improve utilization of spectrum resources. The D2D communication includes one-to-many communication (one-to-many communication) and one-to-one communication (one-to-one communication). The one-to-many communication may correspond to multicast and broadcast communication, and the one-to-one communication may correspond to unicast communication. In the one-to-one communication, if transmitting UE and receiving UE are in a short distance range, the transmitting UE and the receiving UE may directly communicate with each other after a mutual discovery.

Proximity-based services (proximity-based services, ProSe) communication: The ProSe communication is also referred to as near field service communication, and is a typical service scenario in the D2D communication. The ProSe communication may include proximity-based services direct communication (ProSe direct communication for short), proximity-based services UE-to-UE relay communication (ProSe U2U relay communication for short), and proximity-based services UE-to-network relay communication (ProSe U2N relay communication for short). For the proximity-based services UE-to-network relay communication, when UE (denoted as UE B) is located outside network coverage, a communication signal between the UE and a RAN device is poor, or another UE (denoted as UE A) needs to assist in data transmission, the UE B may access the network with assistance of the UE A.

The UE B may be referred to as proximity-based services remote UE (ProSe remote UE), or 5G proximity-based services remote UE (5G ProSe remote UE), or referred to as remote UE (remote UE) for short. The UE A may be referred to as a proximity-based services UE-to-network relay (ProSe UE-to-network relay), or a 5G proximity-based services UE-to-network relay (5G ProSe UE-to-network relay), or referred to as relay UE (relay UE) for short. The remote UE and the relay UE may support a proximity-based services application (ProSe application) function, to support the remote UE in establishing a PC5 connection to the relay UE. Therefore, the relay UE communicates (that is, ProSe communication) with the network, to obtain a service provided by the network.

Discovery type (discovery type): In embodiments of this application, the discovery type includes an open discovery (open discovery) and a restricted discovery (restricted discovery). For content related to the open discovery and the restricted discovery, refer to the 3rd generation partnership project (3rd generation partnership project, 3GPP) technical standards (technical standards, TS) 23.303, v15.1.0. Details are not described herein in this disclosure. For example, if a user uses a terminal device to play a game and does not have a specific game partner, the user may initiate an open discovery to find a game partner "randomly". However, if the user has a specific partner when playing the game by using the terminal device, the user may "specify" a partner through the restricted discovery. Only the partner specified by the user can access the game, and others cannot access the game.

Discovery mode (discovery mode): In a 5G ProSe standard such as the 3GPP TS 23.303, v15.1.0, a model A (model A) or a model B (model B) is defined, and is used for a mutual discovery of terminals during the ProSe communication. A difference between the model A and the model B lies in a discovery initiation mode. The model A means "I am here". In a model A discovery procedure, terminal devices at both ends are classified into announcing user equipment (announcing UE) and monitoring user equipment (monitoring UE). The announcing UE announces "I am here", and after receiving the message announced by the announcing UE, the monitoring UE determines, depending on whether a service requirement of the monitoring UE is met, whether to establish a proximity-based services connection to the announcing UE. The model B means "Who is there/Where are you?". In a model B discovery procedure, terminal devices at both ends are classified into discoveree UE (discoveree UE) and discoverer UE (discoverer UE). The discoverer UE initiates a specific service request message, and the request message includes specific information, that is, "Who is there/Where are you?". After receiving the service request initiated by the discoverer UE, the discoveree UE determines, depending on whether the discoveree UE can provide a service, whether to respond to the request message, for example, sends a response message, indicating that "I am here". In embodiments of this application, an example in which an open discovery scenario is applicable to a model A discovery mode, and a restricted discovery scenario is applicable to the model A and model B discovery modes is used for description. A person of ordinary skill in the art may understand that this description does not constitute a limitation on the present disclosure.

In embodiments of the present disclosure, the remote communication apparatus may obtain the serving network identifier of the relay communication apparatus, to perform the authentication between the remote communication apparatus and the relay communication apparatus.

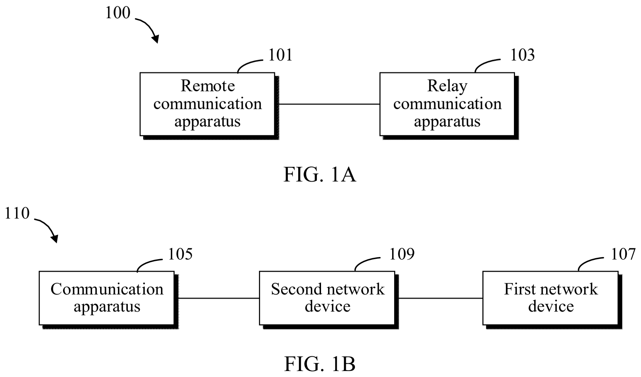

FIG. 1A shows a communication scenario in which an embodiment of this application may be implemented. The communication scenario 100 is used to establish a relay communication connection, including a remote communication apparatus 101 and a relay communication apparatus 103. The remote communication apparatus 101 may be a remote terminal apparatus or remote UE, and the relay communication apparatus 101 may be a relay terminal apparatus or relay UE. The remote communication apparatus 101 obtains a serving network identifier of the relay communication apparatus, and further obtains authentication request information from the relay communication apparatus 103. The authentication request information includes network name information. When determining that the serving network identifier is the same as the network name information, the remote communication apparatus 101 sends an authentication response message in response to the authentication request message to the relay communication apparatus 103, to complete authentication on the remote communication apparatus 101. In addition, an identity of the relay communication apparatus is confirmed, to complete an authentication procedure. This avoids a security risk caused by the relay communication apparatus because the relay communication apparatus provides a serving network identifier inconsistent with the network name information in the authentication request message.

In this embodiment of the present disclosure, when the remote communication apparatus 101 establishes a relay communication security link by using control plane signaling, the remote communication apparatus 101 may alternatively determine not to obtain the serving network identifier of the relay communication apparatus 103. The remote communication apparatus 101 obtains the authentication request information from the relay communication apparatus 103. The authentication request information includes the network name information. In addition, the remote communication apparatus 101 sends the authentication response message in response to the authentication request message to the relay communication apparatus 103. The authentication response message is used to authenticate the remote communication apparatus 101. In this way, authentication may be directly passed without comparing the serving network identifier of the relay communication apparatus with the network name information, so that the remote communication apparatus is slightly modified, and good compatibility is maintained.

FIG. 1B shows another communication scenario in which an embodiment of this application may be implemented. A network configures serving network identifiers for a remote communication device and a relay communication device, to perform authentication. The communication scenario 110 is used to establish a relay communication connection, including a communication apparatus 105, a first network device 107, and a second network device 109. The communication apparatus 105 may be a remote communication apparatus or a relay communication apparatus. The first network device 105 determines, based on a relay service identifier associated with a communication apparatus, a serving network identifier corresponding to the relay service identifier. The first network device 107 sends the relay service identifier and the serving network identifier to the second network device 109, to enable the second network device 109 to send the relay service identifier and the serving network identifier to the communication apparatus 105. The remote communication apparatus and the relay communication apparatus separately obtain the relay service identifier and the serving network identifier from a network device, to complete an authentication process. In addition, an identity of the relay communication apparatus is confirmed, to complete an authentication procedure. This avoids a security risk caused by the relay communication apparatus because the relay communication apparatus provides a serving network identifier inconsistent with network name information in an authentication request message.

The following describes the foregoing technical solutions in detail.

The remote communication apparatus 101, the relay communication apparatus 103, and the communication apparatus 105 shown above may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The remote communication apparatus 101, the relay communication apparatus 103, and the communication apparatus 105 may alternatively be communication chips having a communication module, or may be vehicles having a communication function, in-vehicle devices (such as an in-vehicle communication apparatus and an in-vehicle communication chip), or the like. The remote communication apparatus 101, the relay communication apparatus 103, and the communication apparatus 105 may have a wireless transceiver function, and can communicate (for example, wireless communication) with one or more network devices in one or more communication systems, and receive network services provided by the network devices. The network devices herein include but are not limited to the first network device 107 and the second network device 109 shown in the figure.

The remote communication apparatus 101, the relay communication apparatus 103, and the communication apparatus 105 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, an in-vehicle device, a wearable device, a terminal apparatus in a future 5G network, a terminal apparatus in a further evolved PLMN network, or the like.

The remote communication apparatus 101, the relay communication apparatus 103, and the communication apparatus 105 may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

In addition, the remote communication apparatus 101, the relay communication apparatus 103, and the communication apparatus 105 may be deployed on land, and include an indoor or outdoor apparatus, a handheld apparatus, or a vehicle-mounted apparatus. The remote communication apparatus 101, the relay communication apparatus 103, and the communication apparatus 105 may alternatively be deployed on water (for example, on a ship). The remote communication apparatus 101, the relay communication apparatus 103, and the communication apparatus 105 may alternatively be deployed in the air (for example, on an aircraft, a balloon, and a satellite).

The network devices 107 and 109 may be network elements of a 4G or 5G core network, for example, network elements such as an AMF, a PCF, an AUSF, a UDM, and a PANF.

With rapid development of mobile communication, universal use of new service types, for example, data services such as video chat and VR/AR, increases a bandwidth requirement of a user. Device-to-device (device-to-device, D2D) communication allows direct communication between user equipment (user equipment, UE), and the user equipment may share spectrum resources with cell users under control of a cell network, so that utilization of the spectrum resources is effectively improved. Currently, the D2D communication has been applied to a 4G network system, and is collectively referred to as proximity-based services (proximity-based services, ProSe) communication.

The D2D communication includes one-to-many communication (one-to-many communication) and one-to-one communication (one-to-one communication). The one-to-many communication corresponds to multicast and broadcast communication, and the one-to-one communication corresponds to unicast communication. In the one-to-one communication, if transmitting UE and receiving UE are in a short distance range, the transmitting UE and the receiving UE may directly communicate with each other after a mutual discovery. In the D2D communication, UE communicates with each other through a PC5 interface, and the communication may be used for information transmission on a data plane and a signaling plane. A link that is used by the UE to perform direct communication by using the direct communication interface PC5 between the UE is referred to as a sidelink (sidelink, SL).

In comparison with conventional cellular network communication, UE that can be used for ProSe communication needs to have a ProSe function. UE having the ProSe function may communicate with each other through the PC5 interface. In a relay communication scenario, the remote communication apparatus 101 may be connected to the relay communication apparatus 103 by using the ProSe function, and then access a network by using the relay communication apparatus 103.

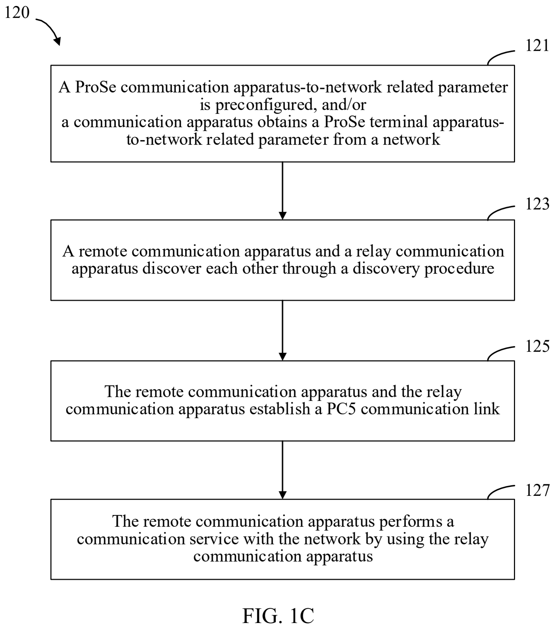

FIG. 1C is a schematic flowchart of establishment of proximity-based services terminal-to-network relay communication according to an embodiment of this application.

3GPP TS 23.304 defines a ProSe terminal apparatus-to-network relay (UE-to-network relay, U2NW) communication scenario. This scenario is used for a remote communication apparatus 101 (or a remote TD or remote UE) to access a network in an indirect connection scenario by using a relay communication apparatus 103 responsible for a U2NW relay function. In this case, it is assumed that the remote communication apparatus 101 is not in a network coverage range or a network coverage signal is weak, and information needs to be forwarded to a network side by using the relay communication apparatus 103.

121: A ProSe communication apparatus-to-network related parameter is configured, that is, ProSe UE obtains a ProSe parameter. The ProSe parameter may be a parameter for implementing ProSe communication. The ProSe parameter may indicate a mechanism for accessing the network by the remote communication apparatus 101, or an access mechanism. The access mechanism may include one or more of the following: a layer 2 relay (L2 relay) mechanism, a layer 3 relay (L3 relay) mechanism, and a layer 3 relay plus non-3GPP interworking function (non-3GPP interworking function, N3IWF) mechanism. The layer 2 relay mechanism may also be referred to as an access mechanism through a layer 2, the layer 3 relay mechanism may also be referred to as an access mechanism through a layer 3 and through a protocol, and the layer 3 relay plus non-3GPP interworking function mechanism may also be referred to as an access mechanism through the layer 3 and through a non-protocol.

123: The remote communication apparatus 101 and the relay communication apparatus 103 perform a mutual discovery, or a ProSe discovery for short. 125: The remote communication apparatus 101 and the relay communication apparatus 103 establish a PC5 unicast communication link.

127: The remote communication apparatus 101 performs a communication service with the network by using the relay communication apparatus 103, and formally sends ProSe user plane data.

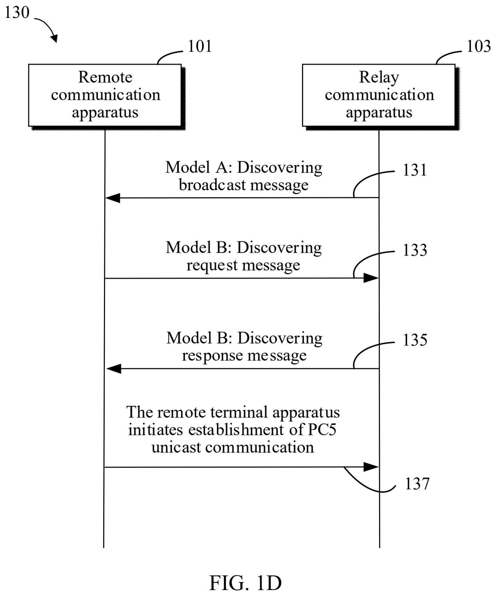

FIG. 1D is a schematic flowchart of a proximity-based services discovery according to an embodiment of this application. 123 in FIG. 1C is a procedure in which a remote communication apparatus and a relay communication apparatus discover each other in proximity-based services, and a specific implementation thereof is shown in FIG. 1D.

In a UE-to-network relay communication scenario in this embodiment of the present disclosure, for example, a remote communication apparatus 101 of remote UE (remote UE) needs to access a network side by using, for example, a relay communication apparatus 103 of relay UE (UE-to-network relay UE, relay UE for short). In this case, it is assumed that the remote communication apparatus 101 is not in a network coverage range, and information needs to be forwarded to the network side by using the relay communication apparatus 103. A discovery message in the UE-to-network relay communication scenario needs to carry a relay service code (relay service code, RSC) to identify that a specific service needs UE-to-network relay communication.

Before the UE-to-network relay communication in the proximity-based services is performed, a ProSe discovery procedure needs to be performed first to determine peer ends of the proximity-based services communication. In the 5G ProSe standard 3GPP TS 23.304, the ProSe discovery procedure includes two discovery modes A and B (a model A and a model B), and one of the two modes is selected for execution.

In a model A discovery procedure, terminal devices at both ends are classified into announcing UE (announcing UE) and monitoring UE (monitoring UE). In this embodiment of the present disclosure, the announcing UE may be the relay communication apparatus 103, and the monitoring UE may be the remote communication apparatus 101. After obtaining a ProSe parameter, the relay communication apparatus 103 actively announces a proximity-based service that interests the relay communication apparatus 103. The proximity-based service may be identified by using an RSC. After obtaining the ProSe parameter, the remote communication apparatus 101 monitors an interesting proximity-based service. The proximity-based service may be identified by using the RSC. In the model A discovery procedure, the relay communication apparatus 103 first sends a discovery announcement message in 131. After receiving the discovery announcement message of the relay communication apparatus 103, the remote communication apparatus 101 determines, depending on whether a service requirement of the remote communication apparatus 101 is met, whether to continue a subsequent procedure, for example, establishing PC5 unicast communication in 137. For example, the discovery announcement message may include an RSC supported by the relay UE, for example, an RSC 1 or an RSC 2. After receiving the discovery announcement message, the remote UE may determine whether the RSC 1 or the RSC 2 is an RSC that needs to be used in ProSe communication. If the discovery announcement message carries the RSC 1, the remote UE determines that the RSC 1 is the RSC that needs to be used in the ProSe communication, and continues to perform a subsequent procedure. If the discovery announcement message carries the RSC 2, the remote UE determines that the RSC 2 is not the RSC that needs to be used in the ProSe communication, and the procedure ends.

In a model B discovery procedure, terminal devices at both ends are classified into discoveree UE (discoveree UE) and discoverer UE (discoverer UE). The discoveree UE may be the relay communication apparatus 103, and the discoverer UE may be the remote communication apparatus 101. In the model B discovery procedure, the remote communication apparatus 101 sends a first discovery request message in 133, to initiate a request for a proximity-based service. The proximity-based service may be identified by using the RSC. After receiving the request message, the relay communication apparatus 103 determines, depending on whether the relay communication apparatus 103 can provide a service, whether to respond to the request message, in other words, sends a discovery response message to the remote communication apparatus 101 in 135. After receiving the discovery response message, the remote communication apparatus 101 initiates, in 137, a subsequent procedure, for example, establishing the PC5 unicast communication. For example, in the model B, the remote communication apparatus 101 may broadcast a discovering request (discovering request) message in 133. The discovery request message may include the RSC that needs to be used in the ProSe communication, for example, the RSC 1 or an RSC 4. After receiving the discovery request message, the relay communication apparatus 103 may determine whether the relay communication apparatus 103 supports the RSC 1 or the RSC 4. If determining that the relay communication apparatus 103 supports the RSC 1 or the RSC 4, the relay communication apparatus 103 may respond to the remote communication apparatus 101, and send a discovering response (discovering response) message in 135, to indicate that the relay communication apparatus 103 supports the RSC 1 or the RSC 4. If determining that the relay communication apparatus 103 does not support the RSC 1 or the RSC 4, the relay communication apparatus 103 does not send the discovery response message to the remote communication apparatus 101. For the remote communication apparatus 101, if the discovery response message is received in 135, a subsequent procedure continues, for example, establishing the PC5 unicast communication in 137. If the discovery response message is not received in 135, the procedure ends.

The ProSe parameter may indicate a mechanism for establishing a PC5 connection, that is, a PC5 connection mechanism, and the foregoing access mechanism. For example, the ProSe parameter may include a relay service identifier (relay service code, RSC), and the RSC may be used to determine the PC5 connection mechanism and the access mechanism.

The PC5 connection mechanism may include a user plane (user plane, UP) mechanism and a control plane (control plane, CP) mechanism. The user plane mechanism may be establishing a relay communication security link by using user plane signaling, the user plane mechanism may be establishing a PC5 security link between the remote communication apparatus 101 and the relay communication apparatus 103 by using user plane signaling, or the user plane mechanism may be establishing a PC5 security key between the remote communication apparatus 101 and the relay communication apparatus 103 by using user plane signaling. The control plane mechanism may be establishing the relay communication security link by using control plane signaling, the control plane mechanism may be establishing the PC5 security link between the remote communication apparatus 101 and the relay communication apparatus 103 by using control plane signaling, or the control plane mechanism may be establishing the PC5 security key between the remote communication apparatus 101 and the relay communication apparatus 103 by using control plane signaling.

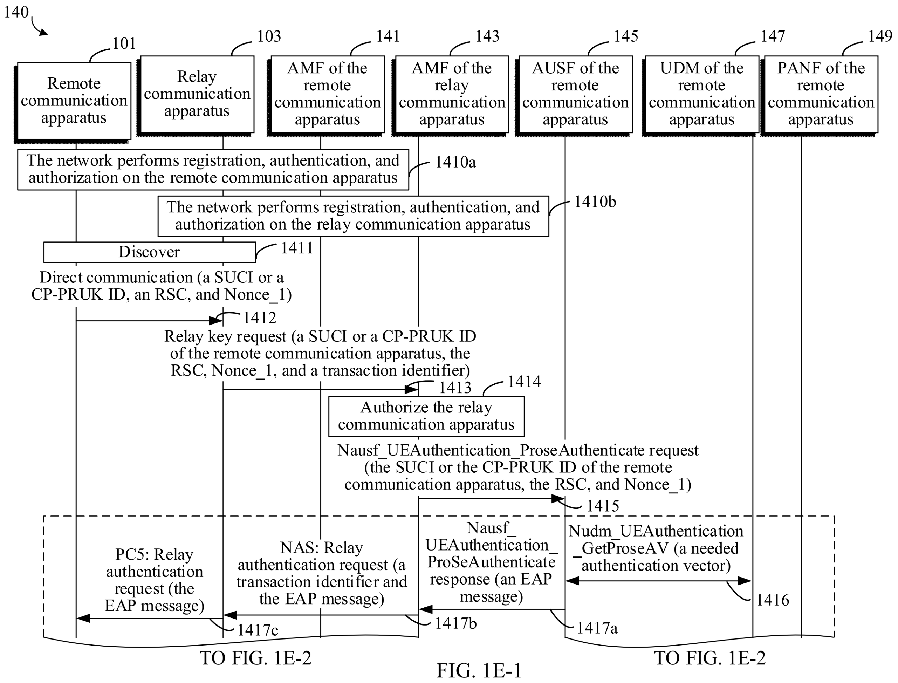

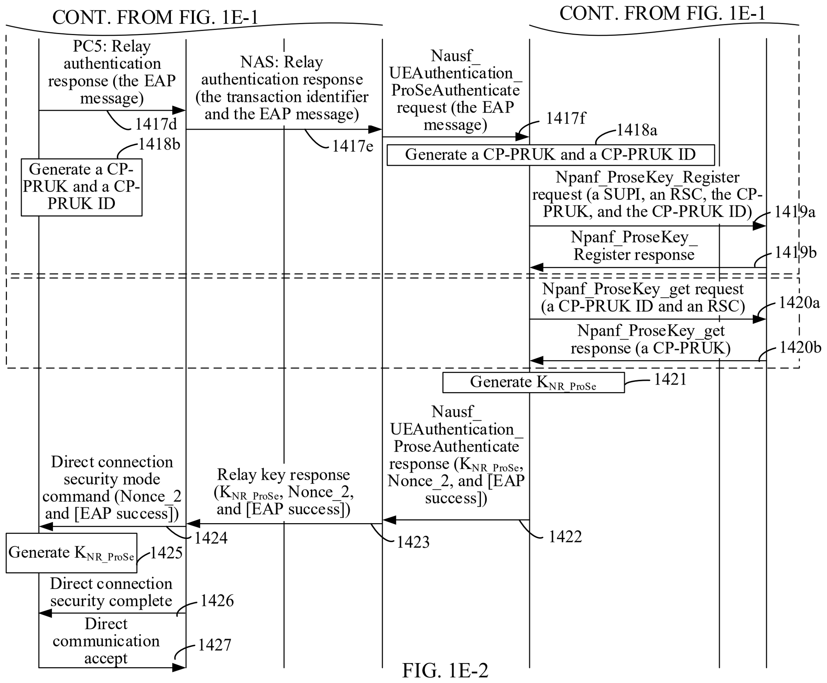

FIG. 1E-1 and FIG. 1E-2 are a schematic flowchart of establishing a PC5 security key between a remote communication apparatus and a relay communication apparatus based on a control plane solution according to an embodiment of this application. In the procedure 140, in 1410a and 1410b, a remote communication apparatus 101 and a relay communication apparatus 103 perform registration, authentication, and authorization respectively by using an access and mobility management function (access and mobility management function, AMF) 141 of the remote communication apparatus and an AMF 143 of the relay communication apparatus.

1411: When the remote communication apparatus 101 needs to access a network by using the relay communication apparatus 103, the remote communication apparatus 101 may perform a ProSe discovery, to discover the relay communication apparatus 103.

1412: After the remote communication apparatus 101 and the relay communication apparatus 103 discover each other, the remote communication apparatus 101 sends a direct communication request (direct communication request, DCR) message to the relay communication apparatus 103, to initiate PC5 establishment. The direct communication request message carries one of a SUCI or a CP-PRUK ID. The relay communication apparatus 103 sends a key obtaining request to the AMF 143 of the relay terminal apparatus in 1413. After verifying permission that the relay communication apparatus 103 can serve as a relay in 1414, the AMF 143 of the relay terminal apparatus sends an authentication request message to an AUSF 145 of the remote communication apparatus in 1415.

The authentication service function (authentication server function, AUSF) 145 of the remote communication apparatus triggers ProSe authentication in 1416, and obtains an authentication vector (authentication vector, AV) from a unified data management (unified data management, UDM) 147 of the remote communication apparatus, only when the DCR carries the SUCI. A ProSe authentication procedure is the same as an EAP-AKA' procedure defined in TS 33.501. To be specific, the AUSF 145 of the remote communication apparatus also needs to obtain a serving network identifier (serving network name, SNN) of the relay communication apparatus 103, and performs mutual authentication with the remote communication apparatus 101 after information needed in the authentication is generated by using the SNN and the AV. After steps 1417a to 1417f, the ProSe authentication procedure is completed. The remote communication apparatus 101 and the AUSF 145 of the remote communication apparatus respectively generate a CP-PRUK and a CP-PRUK ID in 1418b and 1418a. The CP-PRUK is a root key for establishing a PC5 link by the remote communication apparatus 101, and the CP-PRUK ID is used to identify the CP-PRUK. The AUSF 145 of the remote communication apparatus may generate K_{NR_ProSe} based on the CP-PRUK, and send K_{NR_ProSe} to the relay communication apparatus 103. K_{NR_ProSe} may be a key of a PC5 connection in a CP mechanism. The remote communication apparatus 101 may generate K_{NR_ProSe} based on the CP-PRUK. In this way, both the remote communication apparatus 101 and the relay communication apparatus 103 obtain K_{NR_ProSe}, and the two parties can establish a PC5 security connection by using K_{NR_ProSe}.

The AUSF 145 of the remote communication apparatus stores the generated CP-PRUK, the CP-PRUK ID, a corresponding RSC, and a subscription permanent identifier (subscription permanent identifier, SUPI) in a PANF 149 of the remote communication apparatus in 1419a and 1419b.

In this embodiment of the present disclosure, the remote communication apparatus 101 may alternatively send the direct communication request message to the relay communication apparatus 103 again. In this case, in the CP mechanism, the direct communication request message may further include a CP-PRUK ID, to indicate that the remote communication apparatus 101 has performed the ProSe authentication procedure before. The AUSF 145 of the remote communication apparatus may directly obtain a corresponding CP-PRUK from the PANF 149 of the remote communication apparatus based on the CP-PRUK ID and an RSC of the remote communication apparatus 101, and does not need to perform the ProSe authentication procedure again.

The CP-PRUK ID carried in the DCR indicates that the remote communication apparatus 101 has performed the ProSe authentication procedure before, only when the DCR carries the CP-PRUK ID. In this case, the AUSF 145 of the remote communication apparatus obtains a corresponding CP-PRUK ID from the PANF 149 of the remote communication apparatus by using a PRUK ID and the RSC in 1420a and 1420b.

In 1421 to 1423, the AUSF 145 of the remote communication apparatus generates K_{NR_ProSe}, and sends K_{NR_ProSe} to the relay communication apparatus 103.

In 1424 to 1427, the remote communication apparatus 101 locally generates K_{NR_ProSe}, and the remote communication apparatus 101 and the relay communication apparatus 103 further derive, by using K_{NR_ProSe}, a key used for the PC5 link and establish the PC5 link.

It may be understood that for a specific procedure of the CP mechanism, refer to related content in 3GPP TS 33.503. Details are not described herein in the present disclosure.

A user plane (user plane, UP) mechanism is a mechanism for obtaining a relay connection key through a user plane of a network. For example, the remote communication apparatus 101 and the relay communication apparatus 103 are respectively pre-configured with a PKMF (ProSe key management function) of the remote communication apparatus 101 and a PKMF address of the relay communication apparatus 103. The remote communication apparatus 101 needs to obtain an UP-PRUK (user plane ProSe remote user key) and an UP-PRUK ID from the PKMF of the remote communication apparatus 101 by using UP signaling. The UP-PRUK is a root key of a PC5 connection in the UP mechanism, and the UP-PRUK ID is an identifier of the root key. When the remote communication apparatus 101 needs to access the network by using a relay, the remote communication apparatus 101 may perform a ProSe discovery, to discover the relay communication apparatus 103. The remote communication apparatus 101 may send the direct communication request message to the relay communication apparatus 103, to initiate establishment of the PC5 connection. In the UP mechanism, the direct communication request message may include: an identifier of a home public land mobile network (home public land mobile network, HPLMN) of the UE, for example, an HPLMN ID, and an SUCI of the UE (the SUCI of the remote UE may alternatively be replaced with the UP-PRUK ID). The relay communication apparatus 103 may send a key obtaining request message to a PKMF of the relay communication apparatus 103 based on the direct communication request message, so that the PKMF of the relay communication apparatus 103 verifies that the relay communication apparatus 103 has the permission to serve as a relay. In this case, the PKMF of the relay communication apparatus 103 may determine the PKMF of the remote communication apparatus 101 based on an HPLMN ID of the remote communication apparatus 101 and a SUCI of the remote communication apparatus 101 (the SUCI of the remote communication apparatus 101 may alternatively be replaced with the UP-PRUK ID), and obtain a KNRP (new radio PC5, NRP) and a KNRP calculation parameter (KNRP freshness parameter) from the PKMF of the remote communication apparatus 101. The PKMF of the relay communication apparatus 103 sends the KNRP and the KNRP calculation parameter to the relay communication apparatus 103. The KNRP may be a key of the PC5 connection in the UP mechanism. After obtaining the KNRP, the relay communication apparatus 103 sends the KNRP calculation parameter to the remote communication apparatus 101, and the remote communication apparatus 101 determines the KNRP based on the UP-PRUK and the KNRP calculation parameter. As a result, both the remote communication apparatus 101 and the relay communication apparatus 103 obtain the KNRP, and the two parties can establish the PC5 security connection by using the KNRP.

It may be understood that for a specific procedure of the UP mechanism, refer to related content in 3GPP TS 33.503. Details are not described herein in the present disclosure.

Different RSCs may be used to determine different access mechanisms and PC5 connection mechanisms. In a UE-to-network relay communication scenario, in addition to identifying a UE-to-network relay communication service, a relay service identifier RSC may be further used to locally index a control plane security indicator (control plane security indicator, CPSI) in the UE. The control plane security indicator indicates UE-to-network relay communication corresponding to the RSC to obtain a key through a control plane channel, in other words, establish the PC5 link by using a CP solution. For example, an RSC 1 is used to determine a CP mechanism plus a layer 2 relay mechanism, an RSC 2 is used to determine a CP mechanism plus a layer 3 relay mechanism, an RSC 3 is used to determine a CP mechanism plus a layer 3 relay plus N3IWF mechanism, an RSC 4 is used to determine an UP mechanism plus a layer 2 relay mechanism, an RSC 5 is used to determine an UP mechanism plus a layer 3 relay mechanism, and an RSC 6 is used to determine an UP mechanism plus a layer 3 relay plus N3IWF mechanism.

In the UE-to-network relay communication scenario, in addition to identifying the UE-to-network relay communication service, RSC information may be further used to locally index a UE-to-network communication layer identifier in the UE. The identifier indicates whether the UE-to-network relay communication corresponding to the RSC uses a layer 2 solution or a layer 3 solution.

ProSe parameters obtained by ProSe UE may have different sources, and use priorities of the ProSe parameters from different sources are different.

For example, the ProSe UE may obtain a ProSe parameter from a PCF, and the ProSe parameter is denoted as a ProSe parameter 1. Specifically, for a specific implementation principle of obtaining a ProSe communication-related parameter from the PCF by the ProSe UE, refer to section 4.16.11 in TS 23.502. Details are not described in the present disclosure. For a ProSe policy, the ProSe UE may send a 5G ProSe policy provisioning request (5G ProSe provisioning request) message to an AMF. The 5G ProSe policy configuration request message may include a 5G ProSe UE-to-network relay communication capability. For example, the ProSe UE has a relay communication capability of serving as remote UE at a layer 2, and/or the ProSe UE has a relay communication capability of serving as remote UE at a layer 3. That the ProSe UE has the relay communication capability of serving as the remote UE at the layer 2 means that the ProSe UE supports accessing the network by using the layer 2 relay mechanism, and that the ProSe UE has the relay communication capability of serving as the remote UE at the layer 3 means that the ProSe UE supports accessing the network by using the layer 3 relay mechanism and accessing the network by using the layer 3 relay + N3IWF mechanism. The AMF may obtain ProSe subscription information of the remote UE from a UDM, and determine, based on ProSe subscription information of the ProSe UE, that the ProSe UE has the 5G ProSe UE-to-network relay communication capability. In this way, the AMF may send the 5G ProSe policy configuration request message to the PCF, so that the PCF passes the ProSe policy through a UE configuration update (UE configuration update, UCU) procedure.

The ProSe UE may obtain a ProSe parameter from a ProSe application server, and the ProSe parameter is denoted as a ProSe parameter 2. The ProSe UE may alternatively obtain a ProSe parameter from a universal integrated circuit card (universal integrated circuit card, UICC) of the ProSe UE, and the ProSe parameter is denoted as a ProSe parameter 3. The ProSe UE may further obtain a ProSe parameter from mobile equipment (mobile equipment, ME) of the ProSe UE, and the ProSe parameter is denoted as a ProSe parameter 4. In this case, use priorities of the ProSe parameters in descending order are the ProSe parameter 1, the ProSe parameter 2, the ProSe parameter 3, and the ProSe parameter 4. The remote communication apparatus 101 may determine, in descending order of the use priorities of the ProSe parameters, which ProSe parameter is to be used, and the ProSe parameter is denoted as a target ProSe parameter.

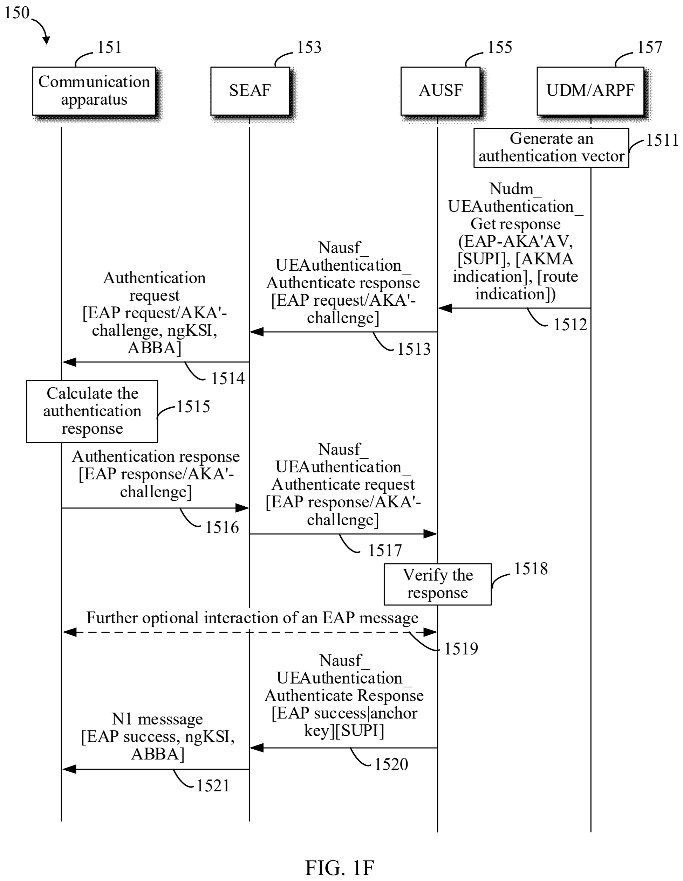

FIG. 1F is a schematic flowchart of EAP-AKA' according to an embodiment of this application. Specifically, FIG. 1F shows an extensible authentication protocol-authentication and key agreement (extensible authentication protocol-authentication and key agreement, EAP-AKA') procedure in FFIG. 1E-1 and FIG. 1E-2 .

A communication apparatus 151 in FIG. 1F may be an implementation of the remote communication apparatus 101 in FIG. 1E-1 and FIG. 1E-2 . A security anchor function (security anchor function, SEAF) 153 in FIG. 1F may be an implementation of the AMF 143 of the relay communication apparatus in FIG. 1E-1 and FIG. 1E-2 . An AUSF 155 in FIG. 1F may be an implementation of the AUSF 145 of the remote communication apparatus in FIG. 1E-1 and FIG. 1E-2 . A UDM/authentication credential repository and processing function (authentication credential repository and processing function, ARPF) 157 in FIG. 1F may be an implementation of the UDM 147 of the remote communication apparatus inFIG. 1E-1 and FIG. 1E-2 .

1511: The UDM/ARPF 157 generates an AV authentication vector needed in EAP-AKA' authentication. 1512: The UDM/ARPF 157 sends the AV authentication vector generated in 1511 to the AUSF 155.

In 1513 and 1514, the AUSF 155 determines an EAP request/AKA'-challenge message based on the AV and SNN information, where the message carries cryptographic credential information and SNN information for mutual authentication in the EAP-AKA' procedure. The AUSF 155 sends the message to the communication apparatus 151 by using the SEAF 153. In a UE-to-network relay communication scenario, the EAP request/AKA'-challenge message further needs to be sent to the remote communication apparatus 101 by using a relay communication apparatus 103.

1515: The communication apparatus 151 calculates a response message, that is, an authentication response, based on the EAP request/AKA'-challenge message. The authentication response includes verifying cryptographic credentials in the EAP request/AKA'-challenge message, or the like. In the IETF RFC 5448 that defines the specific EAP-AKA' procedure, the remote communication apparatus 101 may further determine, based on a local requirement of the remote communication apparatus 101, that a serving network identifier (denoted as an SNN*) of the relay communication apparatus 103 is obtained in another way, and verify whether the network name information SNN obtained from the EAP request/AKA'-challenge message is consistent with the SNN*. If the SNN and the SNN* are consistent, the step of verifying the cryptographic credentials is performed and the subsequent steps are performed. Specifically, the SNN information in the EAP request/AKA'-challenge message is carried in a network name item in AT _KDF_INPUT.

In 1516 to 1521, the communication apparatus 151 responds to the EAP request/AKA'-challenge message, and performs a subsequent mutual authentication procedure with the AUSF 155. After the authentication succeeds, the AUSF 155 responds with an EAP success message. Then, the communication apparatus 151 and the AUSF 155 separately generate a communication key as a root key for communication between the UE and a network side.

As described above, a terminal apparatus in the EAP-AKA' procedure may verify, based on a requirement of the terminal apparatus, whether a serving network identifier obtained by the terminal apparatus is consistent with the network name information (SNN) in the EAP authentication message from the AUSF. When conventional UE accesses a network, the UE may obtain a serving network identifier from a message broadcast by a base station. However, in the UE-to-network relay communication scenario, for example, a relay communication apparatus 103 of relay UE does not send a serving network identifier (SNN*) of the relay communication apparatus 103 to the remote communication apparatus 101. Therefore, if the remote communication apparatus 101 determines that the step of comparing the serving network identifier of the relay communication apparatus with network name information in RFC 5448 needs to be performed, ProSe authentication (EAP-AKA') in a process of establishing a PC5 security key between the remote communication apparatus 101 and the relay communication apparatus 103 in a control plane solution cannot be performed, and consequently, the procedure fails.

The present invention provides a method, so that in a process in which a terminal device establishes the PC5 security key between the remote communication apparatus 101 and the relay communication apparatus 103 by using the control plane solution, the terminal device obtains the serving network identifier of the relay communication apparatus 103, that is, obtains the SNN*, in a way other than the way of obtaining from the EAP request/AKA'-challenge message.

In this embodiment of the present disclosure, the serving network identifier of the relay communication apparatus 103 includes PLMN ID information of a serving network of the relay communication apparatus 103, and the serving network identifier of the relay communication apparatus 103 may include any type of identifier information of the PLMN ID information of the serving network of the relay communication apparatus 103, including but not limited to a PLMN ID or a new radio cell global identifier (new radio cell global ID, NCGI). The NCGI includes the PLMN ID and an NR cell ID. The serving network identifier of the relay communication apparatus 103 may alternatively be information used to determine the PLMN ID information of the serving network of the relay communication apparatus 103, for example, information used to index the PLMN ID information of the serving network of the relay communication apparatus 103.

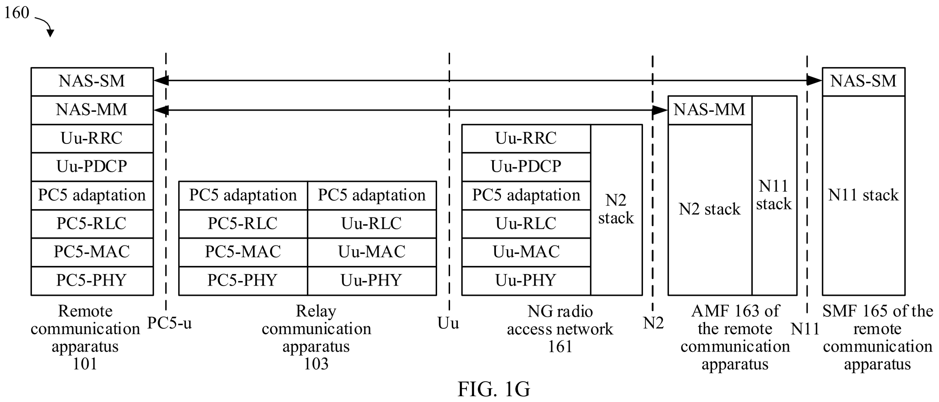

FIG. 1G is a diagram of a layer 2 protocol stack used for remote communication apparatus-to-network relay communication according to an embodiment of this application.

As shown in FIG. 1G, a layer 2 relay mechanism is a mechanism for accessing a network by using a layer 2 relay communication apparatus 103. In this case, a network side, for example, an NG radio access network (NG-RAN) 161 and an AMF 163 of a remote communication apparatus, may perceive existence of a remote communication apparatus 101. For example, the remote communication apparatus 101 may establish a security connection to the NG radio access network 161 by using a PC5 connection. In this case, security between the remote communication apparatus 101 and the NG radio access network 161 is established between a packet data convergence protocol (packet data convergence protocol, PDCP) layer of the remote communication apparatus 101 and a PDCP layer of the NG radio access network 161 in an end-to-end manner. The remote communication apparatus 101 may register with a network through ProSe communication provided by the layer 2 relay communication apparatus 103, and establish or modify a PDU session of the remote communication apparatus 101, to obtain a service from a DN by using the PDU session. The relay communication apparatus 103 does not parse the PDCP layer, and the relay communication apparatus 103 transparently transmits information about a PDCP layer of the remote communication apparatus 101 and the PDCP layer and a higher layer of the NG radio access network 161, for example, information about registration of the remote communication apparatus 101 with the network, information about PDU session establishment or modification initiated by the remote communication apparatus 103, or user plane data of the remote communication apparatus 103.

UE-to-network communication defined in 3GPP TS 23.304 may be based on a layer 2, that is, the relay communication apparatus 103 forwards data based on layer 2 routing. The layer 2 is located between a physical layer and an IP layer. Alternatively, the relay communication apparatus 103 may forward data based on a layer 3, that is, based on an IP address.

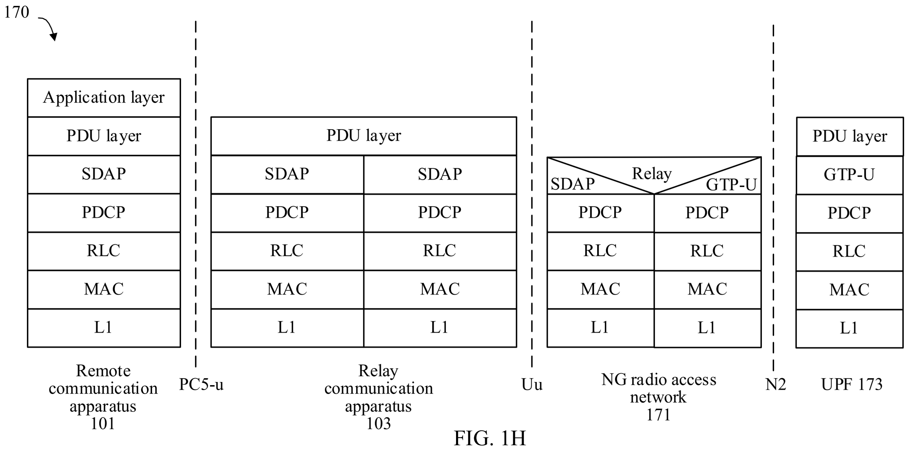

FIG. 1H is a diagram of a layer 3 protocol stack used for remote terminal apparatus-to-network relay communication according to an embodiment of this application.

As shown in FIG. 1H, a layer 3 relay mechanism is a mechanism for accessing a network by using a layer 3 relay communication apparatus 103. In this case, the network may not perceive existence of a remote communication apparatus 101. Security between the remote communication apparatus 101 and an NG radio access network 171 is established in segments, and includes security from a PDCP layer of the remote communication apparatus 101 to a PDCP layer of the relay communication apparatus 103 and security from the PDCP layer of the relay communication apparatus 103 to a PDCP layer of the NG radio access network 171. The relay communication apparatus 103 needs to establish or modify a PDU session for the remote communication apparatus 101. To be specific, ProSe communication that is between the remote communication apparatus 101 and the network and that is provided by using the layer 3 relay communication apparatus 103 is implemented by reusing the PDU session of the relay communication apparatus 103. Establishment or modification of the PDU session complies with a definition in TS 23.502. The relay communication apparatus 103 needs to parse the PDCP layer, to determine to forward data to the remote communication apparatus 101.

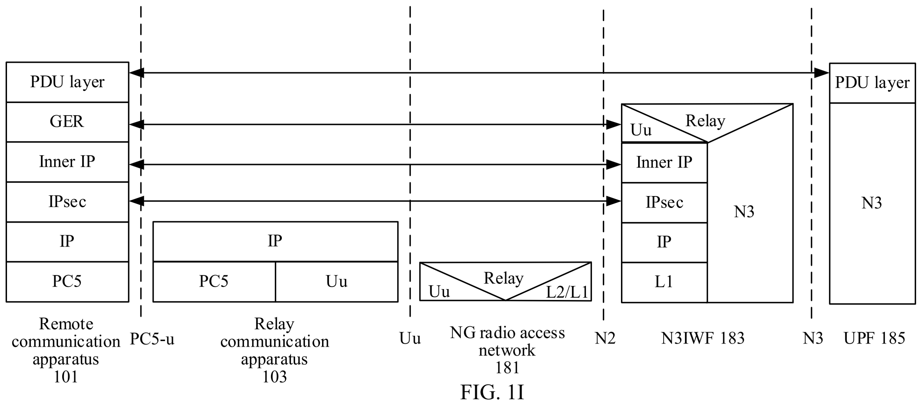

FIG. 1I is a diagram of a layer 3 protocol stack used for remote terminal apparatus-to-network relay plus N3IWF mechanism communication according to an embodiment of this application.

As shown in FIG. 1I, a layer 3 relay plus N3IWF mechanism is a mechanism for accessing a network by using a layer 3 relay communication apparatus 103 and a non-3GPP protocol. The remote communication apparatus 101 needs to establish a secure channel from the remote communication apparatus 101 to the N3IWF by using the layer 3 relay plus N3IWF mechanism, and access a network side by using the secure channel. In this case, the network side may perceive existence of the remote communication apparatus 101. ProSe communication that is between the remote communication apparatus 101 and the network and that is provided by using the layer 3 relay plus N3IWF mechanism means that the remote communication apparatus 101 establishes a secure channel to the N3IWF by using a layer 3 of the relay communication apparatus 103 and the mechanism for accessing the network by using the non-3GPP, to register with the network and establish or modify a PDU session of the remote communication apparatus 101, to obtain a service from a DN by using the PDU session.

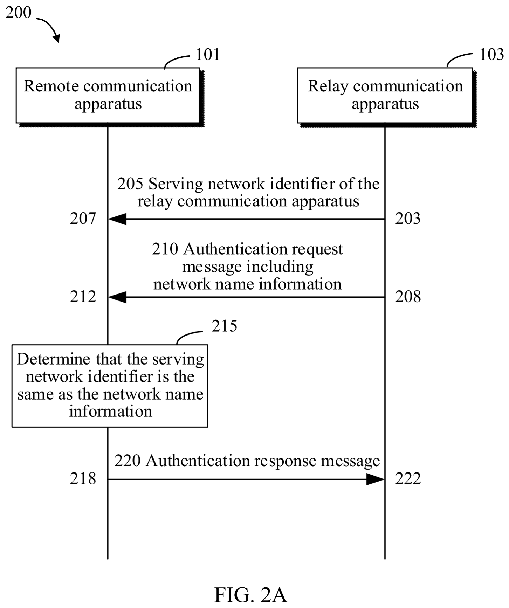

FIG. 2A is a schematic flowchart in which a remote communication apparatus authenticates a relay communication apparatus according to an embodiment of this application.

In the procedure 200, a remote communication apparatus 101 obtains a serving network identifier of a relay communication apparatus 103. Specifically, the remote communication apparatus 101 may receive (207) a serving network identifier 205 of the relay communication apparatus 103 sent (203) by the relay communication apparatus 103. It may be understood that the remote communication apparatus 101 may alternatively obtain the serving network identifier of the relay communication apparatus 103 in another manner, for example, obtain the serving network identifier from a local memory. This is not limited in the present disclosure.

The remote communication apparatus 101 receives (212) an authentication request message 208 of the relay communication apparatus 103 sent (208) by the relay communication apparatus 103. The authentication request message 208 includes network name information.

215: The remote communication apparatus 101 determines that the serving network identifier is the same as the network name information. When the remote communication apparatus 101 determines that the serving network identifier is the same as the network name information, the remote communication apparatus 101 determines that the remote communication apparatus 101 may access a network by using the relay communication apparatus 103 to obtain a service and continue a subsequent EAP-AKA' authentication procedure. Optionally, when the remote communication apparatus 101 determines that the serving network identifier is different from the network name information, the remote communication apparatus 101 determines not to access the network by using the relay communication apparatus 103 to obtain the service, and not to continue the subsequent EAP-AKA' authentication procedure.

Then, the remote communication apparatus 101 sends (218) an authentication response message 220, to continue the EAP-AKA' authentication procedure. In this way, it may be determined, by comparing the serving network identifier of the relay communication apparatus 103 with network name information in authentication request information 210, that the service can be obtained by accessing the network by using the relay communication apparatus 103, and to complete the authentication procedure, and it can be avoided that the relay communication apparatus 103 provides a serving network identifier that is inconsistent with the network name information in the authentication request message, thus preventing a security risk.

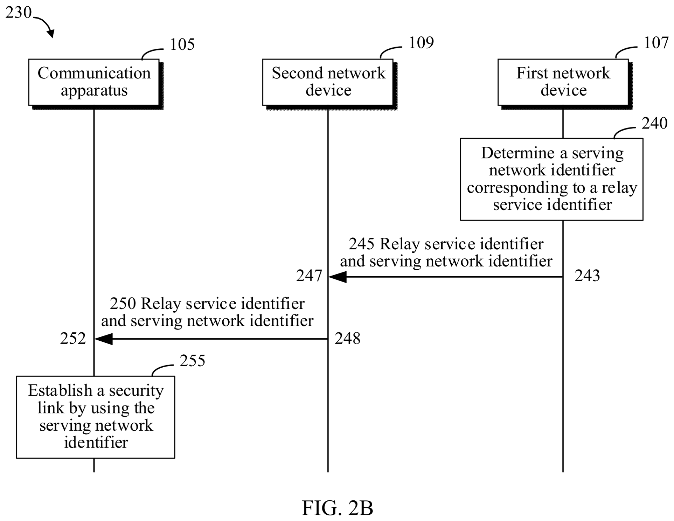

FIG. 2B is a schematic flowchart in which a network device sends a relay service identifier and a serving network identifier to a communication apparatus according to an embodiment of this application.

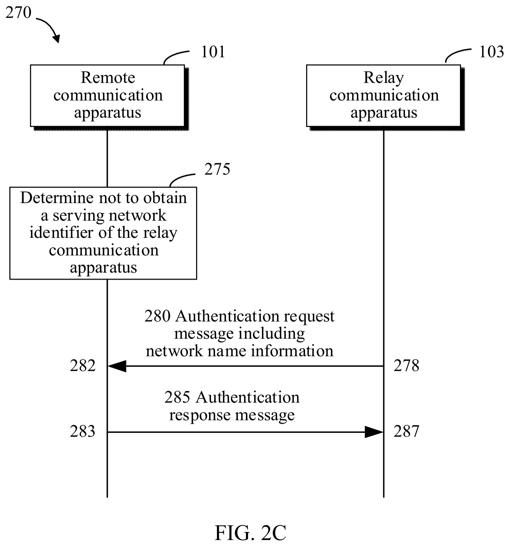

In the procedure 230, a first network device 107 determines, in 240, a serving network identifier corresponding to the relay service identifier. The first network device 107 sends (243) the relay service identifier and the serving network identifier 245 to a second network device 109. The second network device 109 sends (248) the relay service identifier and the serving network identifier 250 to a communication apparatus 105. The communication apparatus 105 may be a remote communication apparatus 101, or may be a relay communication apparatus 103. The communication apparatus 105 establishes a connection by using the serving network identifier in 255. Specifically, when determining to use the relay service identifier to establish a communication service performed by the remote communication apparatus with a network by using the relay communication apparatus, the communication apparatus 105 performs an EAP-AKA' authentication procedure by using the serving network identifier corresponding to the relay service identifier. In this way, both the remote communication apparatus 101 and the relay communication apparatus 103 may obtain, from the network device, the relay service identifier and the serving network identifier corresponding to the relay service identifier, to implement authentication between the remote communication apparatus 101 and the relay communication apparatus 103. FIG. 2C is a schematic flowchart in which a remote terminal apparatus performs authentication without obtaining a serving network identifier of a relay terminal apparatus according to an embodiment of this application.

In the procedure 270, a remote communication apparatus 101 determines (275) not to obtain a serving network identifier of a relay communication apparatus 103. The remote communication apparatus 101 receives (282) an authentication request message 280 including a network name and sends (283) an authentication response message 285 to the relay communication apparatus 103. Optionally, that the remote communication apparatus 101 determines (275) not to obtain the serving network identifier of the relay communication apparatus 103 may alternatively include: regardless of whether the serving network identifier of the relay communication apparatus 103 is obtained, not determining whether the serving network identifier of the relay communication apparatus 103 is the same as the network name in the authentication request message 280. In this way, the authentication may be directly passed without comparing the serving network identifier of the relay communication apparatus 103 with the network name information, so that the remote communication apparatus 101 is slightly modified, and good compatibility is maintained.

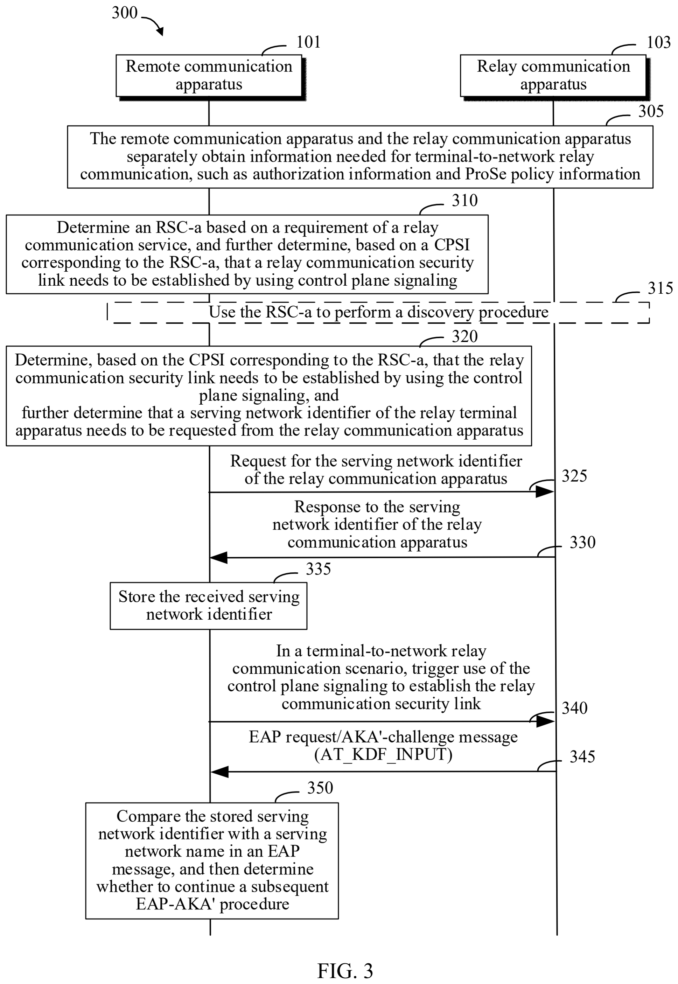

FIG. 3 is a schematic flowchart in which a remote communication apparatus obtains a serving network identifier of a relay communication apparatus for authentication according to an embodiment of this application.

In the procedure 300, a remote communication apparatus 101 triggers, depending on whether to establish a relay communication security link by using control plane signaling, a request to obtain the serving network identifier of the relay communication apparatus from a relay communication apparatus 103.

305: The remote communication apparatus 101 and the relay communication apparatus 103 separately obtain information needed for terminal-to-network relay communication, such as authorization information and ProSe parameter information. The authorization and ProSe parameter information obtained by the remote communication apparatus 101 and the relay communication apparatus 103 is used by the remote communication apparatus 101 and the relay communication apparatus 103 to establish the relay communication security link by using the control plane signaling, including parameters for a mutual discovery and subsequent UE-to-relay communication. Specifically, the authorization and ProSe parameter information includes a relay service identifier (relay service code, RSC) used for discovering and establishing a PC5 link and control plane security indicator (control plane security indicator, CPSI) information corresponding to the RSC. The RSC indicates a corresponding relay communication service, and the CPSI indicates that the relay communication service corresponding to the RSC needs to establish the PC5 link by using a CP solution. In other words, the CPSI indicates that the relay communication service corresponding to the RSC needs to establish the relay communication security link by using the control plane signaling.

310: The remote communication apparatus 101 determines an RSC, denoted as an RSC-a, based on a requirement of the relay communication service, and further determines, based on a CPSI corresponding to the RSC-a, that the relay communication security link needs to be established by using the control plane signaling. 315: The remote communication apparatus 101 and the relay communication apparatus 103 use the RSC-a to perform a discovery procedure. This step is applicable to obtaining an SNN* in a non-discovery procedure.

320: The remote communication apparatus 101 determines, based on the CPSI corresponding to the RSC-a, that the relay communication security link needs to be established by using the control plane signaling, and further determines that a serving network identifier of the relay communication apparatus 103 needs to be requested from the relay communication apparatus 103. Optionally, the remote communication apparatus 101 triggers obtaining of the serving network identifier of the relay communication apparatus 103 based on a local requirement and/or when determining that the relay communication security link needs to be established by using the control plane signaling. The local requirement may be that a communication apparatus locally configures an action that is of comparing the serving network identifier of the relay communication apparatus 103 and the serving network name and that needs to be performed in the EAP-AKA' procedure. In this way, the remote communication apparatus 101 may autonomously trigger a request for the serving network identifier of the relay communication apparatus, to improve system reliability.

325: The remote communication apparatus 101 sends the request for the serving network identifier of the relay communication apparatus, to request the serving network identifier of the relay communication apparatus 103 from the relay communication apparatus 103. The request may be any one or more of the following forms: (a) The request may be a predefined request message used to request the serving network identifier of the relay communication apparatus, where a message format of the request message is different from that of another conventional request message. (b) The request may be a discovery message in a discovery procedure model B, where the discovery message carries explicit indication information, and the indication information indicates that the serving network identifier of the relay communication apparatus 103 needs to be requested. (c) If the remote communication apparatus 101 determines, based on a UE-to-network relay layer indicator (UE-to-network relay layer indicator) corresponding to the RSC-a, that a layer 3 UE-to-network relay service needs to be used, the message may further be an additional parameters announcement request (additional parameters announcement request) message, where the message carries explicit indication information, and the indication information indicates that serving network identifier information of the relay communication apparatus 103 needs to be requested. (d) The request may be an additional parameters announcement request (additional parameters announcement request) message, where the message carries explicit indication information, and the indication information indicates that the serving network identifier information of the relay communication apparatus 103 needs to be requested. In the foregoing manners, the remote communication apparatus 101 may determine, based on the local requirement, to request the serving network identifier of the relay communication apparatus 103. There is some autonomy and flexibility in obtaining of the serving network identifier.

330: The relay communication apparatus 103 responds with a response to the request for the serving network identifier, where the response carries the serving network identifier of the relay communication apparatus 103. The response message may be any one or more of the following: (a) a newly defined response message, used to respond to the request message newly defined in the request message form (a); (b) a discovery response message in the discovery procedure model B, used to respond to the request message form (b), where the discovery response message carries the serving network identifier of the relay communication apparatus 103; and (c) a relay discovery additional information message (relay discovery additional information message) for responding to the additional parameters announcement request message in the request message form (c) or (d), where the relay discovery additional information message carries the serving network identifier of the relay communication apparatus 103. In this embodiment of the present disclosure, the carried serving network identifier of the relay communication apparatus 103 may exist in a form of a new radio cell global identifier (new radio cell global ID, NCGI), in other words, the relay discovery additional information message is forced to carry the NCGI. In the foregoing manners, the relay communication apparatus 103 may respond with the serving network identifier of the relay communication apparatus 103 by using a response message in a corresponding form based on an implementation form of the request of the remote communication apparatus 101. There is some autonomy and flexibility in obtaining of the serving network identifier.

335: The remote communication apparatus 101 stores the received serving network identifier of the relay communication apparatus 103.

In 340 to 350, a subsequent procedure of establishing the relay communication security link by using the control plane signaling is performed, including: In EAP-AKA', the remote communication apparatus 101 compares the serving network name with the serving network identifier of the relay communication apparatus 103, and determines, based on a comparison result, whether to perform the subsequent procedure of establishing the relay communication security link by using the control plane signaling. In this way, this can avoid that the relay communication apparatus 103 provides a serving network identifier that is inconsistent with network name information in an authentication request message, so that a security risk caused by the relay communication apparatus 103 is prevented.

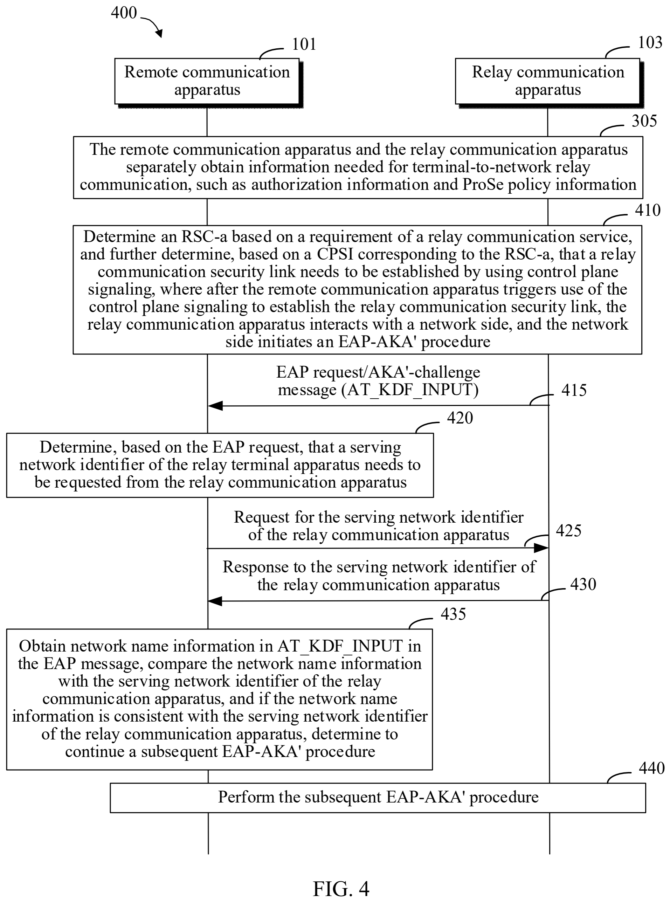

FIG. 4 is a schematic flowchart in which a remote communication apparatus obtains a serving network identifier of a relay communication apparatus for authentication according to another embodiment of this application. In the procedure 400, a remote communication apparatus 101 triggers, based on an EAP message from a relay communication apparatus 103, a request to obtain the serving network identifier of the relay communication apparatus from the relay communication apparatus 103.

305 in FIG. 4 is the same as that in FIG. 3. The remote communication apparatus 101 and the relay communication apparatus 103 separately obtain information needed for terminal-to-network relay communication, such as authorization information and ProSe parameter information. The authorization and ProSe parameter information obtained by the remote communication apparatus 101 and the relay communication apparatus 103 is used by the remote communication apparatus 101 and the relay communication apparatus 103 to establish a relay communication security link by using control plane signaling, including parameters for a mutual discovery and subsequent UE-to-relay communication. Specifically, the authorization and ProSe parameter information includes a relay service identifier (relay service code, RSC) used for discovering and establishing a PC5 link and control plane security indicator (control plane security indicator, CPSI) information corresponding to the RSC. The RSC indicates a corresponding relay communication service, and the CPSI indicates that the relay communication service corresponding to the RSC needs to establish the PC5 link by using a CP solution. In other words, the CPSI indicates that the relay communication service corresponding to the RSC needs to establish the relay communication security link by using the control plane signaling.

410: The remote communication apparatus 101 determines an RSC, denoted as an RSC-a, based on a requirement of the relay communication service, and further determines, based on a CPSI corresponding to the RSC-a, that the relay communication security link needs to be established by using the control plane signaling, to establish the PC5 link. After the remote communication apparatus 101 triggers use of the control plane signaling to establish the relay communication security link, the relay communication apparatus 103 interacts with a network side, and the network side initiates a ProSe authentication (EAP-AKA') procedure.

415: The relay communication apparatus 103 interacts with the network side based on the triggering of the remote communication apparatus 101, and after the network side initiates the ProSe authentication (EAP-AKA') procedure, the relay communication apparatus 103 obtains an EAP request/AKA'-challenge message from the network side, and sends the EAP request/AKA'-challenge message to the remote communication apparatus 101. Specifically, the relay communication apparatus 103 sends the EAP request/AKA'-challenge message to the remote communication apparatus 101. The message carries AT_KDF_INPUT information, and a network name field in the AT_KDF_INPUT information includes network name information.

420: After receiving the EAP request/AKA'-challenge message, the remote communication apparatus 101 determines that a serving network identifier of the relay communication apparatus 103 needs to be requested from the relay communication apparatus 103.

In this embodiment of the present disclosure, the remote communication apparatus 101 may trigger obtaining of the serving network identifier of the relay communication apparatus 103 based on a local requirement. Alternatively, when receiving the EAP request/AKA'-challenge message, the remote communication apparatus 101 may trigger the obtaining of the serving network identifier of the relay communication apparatus 103. The local requirement may be locally configuring an action that is of comparing the serving network identifier of the relay communication apparatus 103 and the network name information and that needs to be performed in the EAP-AKA' procedure. In this way, the serving network identifier of the relay communication apparatus 103 may be obtained, to continue the authentication procedure, and avoid that the relay communication apparatus 103 provides a serving network identifier that is inconsistent with network name information in an authentication request message, so that a risk caused by the relay communication apparatus 103 is prevented.

In this embodiment of the present disclosure, the remote communication apparatus 101 may alternatively determine, based on the CPSI corresponding to the RSC-a, that the relay communication security link needs to be established by using the control plane signaling, and trigger a request to obtain the serving network identifier of the relay communication apparatus 103. The remote communication apparatus 101 may alternatively trigger, based on the received EAP request/AKA'-challenge message, the request to obtain the serving network identifier of the relay communication apparatus 103.

425: The remote communication apparatus 101 sends a request for the serving network identifier of the relay communication apparatus, to request the serving network identifier of the relay communication apparatus 103 from the relay communication apparatus 103. A form of the request is the same as the form used in 325 in FIG. 3. Details are not described herein again in the present disclosure. In the foregoing manners, the remote communication apparatus 101 may determine, based on the local requirement, to request the serving network identifier of the relay communication apparatus 103. There is some autonomy and flexibility in obtaining of the serving network identifier.

430: The relay communication apparatus 103 responds with a response to the request for the serving network identifier, where the response carries the serving network identifier of the relay communication apparatus 103. An implementation form of the response message is the same. Details are not described herein again in the present disclosure. In the foregoing manners, the relay communication apparatus 103 may respond with the serving network identifier of the relay communication apparatus 103 by using a response message in a corresponding form based on an implementation form of the request of the remote communication apparatus 101. There is some autonomy and flexibility in obtaining of the serving network identifier.

435: The remote communication apparatus 101 obtains the network name information in the AT_KDF_INPUT in the EAP message, and compares the network name information with the serving network identifier of the relay communication apparatus 103. If the network name information is consistent with the serving network identifier of the relay communication apparatus 103, the remote communication apparatus 101 determines to continue a subsequent EAP-AKA' procedure. 440: The remote communication apparatus 101 and the relay communication apparatus 103 perform the subsequent EAP-AKA' procedure to complete authentication and key agreement. In this way, the relay communication apparatus 103 may trigger, in an EAP request manner, the terminal communication apparatus 101 to request the service network identifier, to perform the subsequent EAP-AKA' procedure. This can avoid that the relay communication apparatus 103 provides a serving network identifier that is inconsistent with network name information in an authentication request message, so that a security risk caused by the relay communication apparatus 103 is prevented.

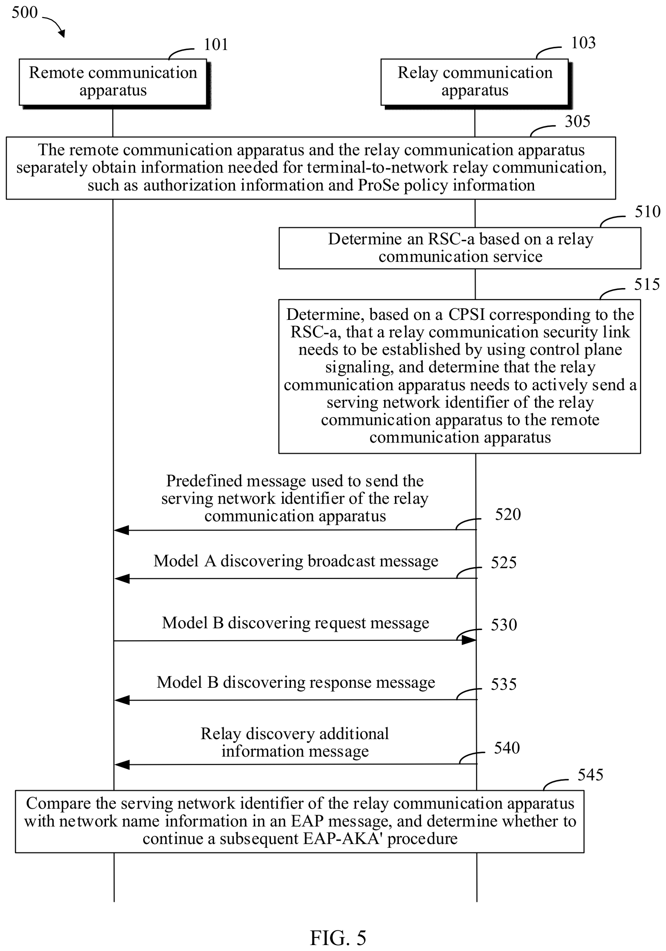

FIG. 5 is a schematic flowchart in which a relay communication apparatus sends a serving network identifier to a remote communication apparatus for authentication according to an embodiment of this application. FIG. 5 specifically shows that a relay communication apparatus 103 actively sends a serving network identifier of the relay communication apparatus 103 to a remote communication apparatus 101, to perform authentication.

305 in FIG. 5 is the same as that in FIG. 3. The remote communication apparatus 101 and the relay communication apparatus 103 separately obtain information needed for terminal-to-network relay communication, such as authorization information and ProSe parameter information.

510: The relay communication apparatus 103 determines an RSC, that is, an RSC-a, based on a requirement of a relay communication service.

515: The relay communication apparatus 103 determines, based on a CPSI corresponding to the RSC-a, that a relay communication security link needs to be established by using control plane signaling. That the relay communication apparatus 103 determines the RSC-a specifically includes: The relay communication apparatus 103 may undertake a relay task in a relay communication service corresponding to the RSC-a. When determining that the relay communication security link is established by using the control plane signaling, the relay communication apparatus 103 determines that the relay communication apparatus 103 needs to actively send the serving network identifier of the relay communication apparatus 103 to the remote communication apparatus 101. In a subsequent process, the relay communication apparatus 103 actively sends the serving network identifier of the relay communication apparatus 103 to the remote communication apparatus 101. A specific implementation is any one or a combination of the following manners.

In this embodiment of the present disclosure, the relay communication apparatus 103 may send the serving network identifier of the relay communication apparatus 103 in 520 by using a predefined message used to send the serving network identifier of the relay communication apparatus 103.

In this embodiment of the present disclosure, if the remote communication apparatus 101 and the relay communication apparatus 103 discover each other by using the model A in FIG. 1D, the relay communication apparatus 103 may carry the serving network identifier of the relay communication apparatus 103 in a discovery announcement message in the model A in 525.

In this embodiment of the present disclosure, if the remote communication apparatus 101 and the relay communication apparatus 103 discover each other by using the model B in FIG. 1D, after the relay communication apparatus 103 receives a model B discovery request message of the remote communication apparatus 101 in 530, the relay communication apparatus 103 responds with a model B discovery response message in 535. The model B discovery response message carries the serving network identifier of the relay communication apparatus 103. Different from that in the embodiment in FIG. 3, the model B discovery request message sent by the remote communication apparatus 101 in 525 is not used to trigger the relay communication apparatus 103 to send the serving network identifier. The relay communication apparatus 103 determines, in 515, to actively send the serving network identifier of the relay communication apparatus 103 as an initial trigger condition for sending the serving network identifier.

In this embodiment of the present disclosure, if the relay communication apparatus 103 determines, based on a UE-to-network relay layer indicator (UE-to-network relay layer indicator) corresponding to the RSC-a, that a layer 3 UE-to-network relay service needs to be used, the relay communication apparatus 103 determines to trigger a relay discovery additional information message (relay discovery additional information message). The relay discovery additional information message carries the serving network identifier of the relay communication apparatus 103. In this embodiment of the present disclosure, the serving network identifier of the relay communication apparatus 103 carried in the relay discovery additional information message may be a new radio cell global identifier (new radio cell global ID, NCGI), in other words, the relay discovery additional information message is forced to carry the NCGI.

In this embodiment of the present disclosure, the relay communication apparatus 103 may trigger the relay discovery additional information message (relay discovery additional information message). The relay discovery additional information message carries the serving network identifier of the relay communication apparatus 103. In this embodiment of the present disclosure, the serving network identifier of the relay communication apparatus 103 carried in the relay discovery additional information message may be the new radio cell global identifier (new radio cell global ID, NCGI), in other words, the relay discovery additional information message is forced to carry the NCGI.

By using one or a combination of the foregoing manners, the relay communication apparatus 103 may send the serving network identifier to the remote communication apparatus 101 in different manners based on a requirement. There is some autonomy and flexibility in sending of the serving network identifier.

545: The remote communication apparatus 101 performs subsequent establishment of the relay communication security link by using the control plane signaling, for example, performs an EAP-AKA' procedure. The remote communication apparatus 101 obtains the serving network identifier of the relay communication apparatus 103 from an EAP message in the subsequent procedure of establishing the relay communication security link by using the control plane signaling. The remote communication apparatus 101 compares network name information in the EAP message with the serving network identifier of the relay communication apparatus 103, and determines, based on a comparison result, whether to perform the subsequent EAP-AKA' procedure. In this way, this can avoid that the relay communication apparatus 103 provides a serving network identifier that is inconsistent with the network name information in an authentication request message, so that a security risk caused by the relay communication apparatus 103 is prevented.

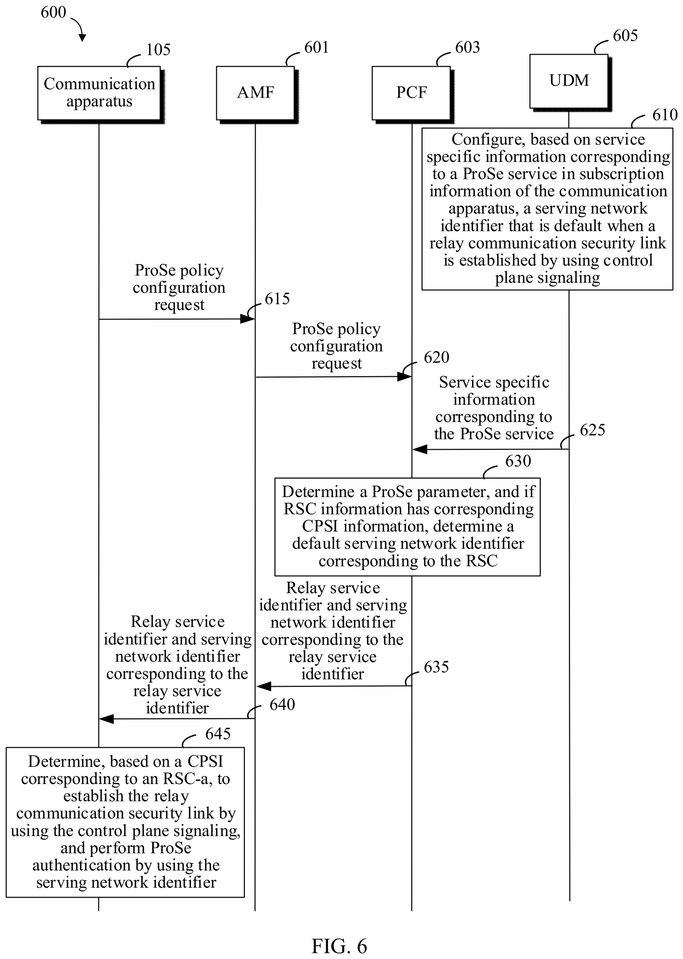

FIG. 6 is a schematic flowchart in which a network device configures a serving network identifier for a communication apparatus to perform authentication according to an embodiment of this application.

610: A UDM 605 configures, based on service specific information (service specific information) corresponding to a ProSe service in subscription information of a communication apparatus 105, a default serving network identifier when a relay communication security link is established by using control plane signaling. A relay solution in this embodiment of the present disclosure includes a remote communication apparatus 101 and a relay communication apparatus 103. The communication apparatus 105 may be the remote communication apparatus 101, or may be the relay communication apparatus 103. The subscription information of the communication apparatus 105 may be subscription information of the remote communication apparatus 101, or may be subscription information of the relay communication apparatus 103.

615: The communication apparatus 105 sends a 5G ProSe policy configuration request (5G ProSe provisioning request) to an AMF 601, where the 5G ProSe policy configuration request may carry a 5G ProSe UE-to-network relay communication capability. The AMF 601 interacts with the UDM 605 (not shown in the figure) to obtain the ProSe subscription information of the communication apparatus 105. The ProSe subscription information of the communication apparatus 105 may be used to determine that the remote communication apparatus 101 may use a UE-to-network relay communication service, or the relay communication apparatus 103 may provide a network relay service for the UE-to-network relay communication service. Then, the AMF 601 sends the received 5G ProSe provisioning request to a PCF 603 in 620, to request a related ProSe parameter. The ProSe parameter includes a ProSe discovery parameter and a PC5 communication parameter that are related to UE-to-network relay communication.

625: The PCF 603 obtains, from the UDM 605, the service specific information (service specific information) corresponding to the ProSe service.

630: The PCF 603 determines the ProSe parameter. If the PCF 603 determines, based on a CPSI corresponding to an RSC-a, that the relay communication security link needs to be established by using the control plane signaling, the PCF 603 determines, based on the service specific information, a default serving network identifier corresponding to the RSC.

In 635 and 640, the PCF 603 sends the relay service identifier RSC and the default serving network identifier corresponding to the relay service identifier RSC to the communication apparatus 105 by using the AMF 601 through a UE configuration update (UCU, UE configuration update) procedure.

645: When determining, based on the CPSI corresponding to the RSC-a, to establish the relay communication security link by using the control plane signaling, the communication apparatus 105 performs ProSe authentication by using a serving network identifier corresponding to the RSC-a. The communication apparatus 105 may be the remote communication apparatus 101 or the relay communication apparatus 103. Therefore, the remote communication apparatus 101 and the relay communication apparatus 103 may perform ProSe authentication. In this way, this can avoid that the relay communication apparatus 103 provides a serving network identifier that is inconsistent with the network name information in an authentication request message, so that a security risk caused by the relay communication apparatus 103 is prevented.

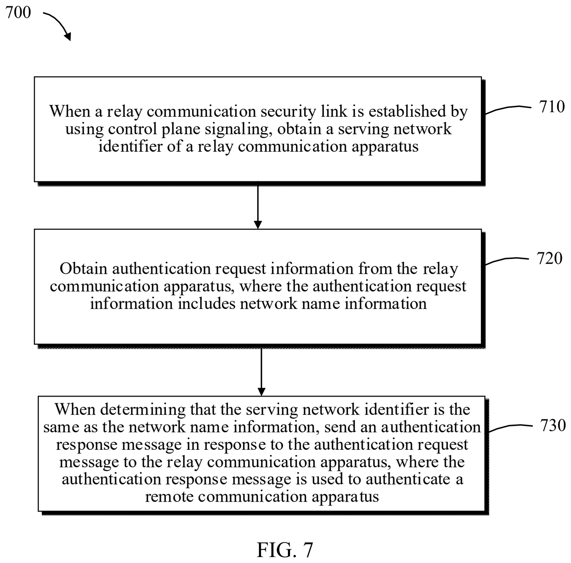

FIG. 7 is a flowchart of a communication method implemented at a remote communication apparatus according to an embodiment of this application, and corresponds to the communication method implemented by the remote communication apparatus 101 in FIG. 2A, FIG. 3, FIG. 4, and FIG. 5.

710: When a relay communication security link is established by using control plane signaling, the remote communication apparatus 101 obtains a serving network identifier of a relay communication apparatus.

720: The remote communication apparatus 101 obtains authentication request information from the relay communication apparatus, where the authentication request information includes network name information.

730: When determining that the serving network identifier is the same as the network name information, the remote communication apparatus 101 sends an authentication response message in response to the authentication request message to a relay communication apparatus 103, where the authentication response message is used to authenticate the remote communication apparatus 101.

In some embodiments, before obtaining the serving network identifier, the remote communication apparatus 101 determines to request the serving network identifier from the relay communication apparatus 103. The remote communication apparatus 101 sends a request message for the serving network identifier to the relay communication apparatus 103.

In some embodiments, that the remote communication apparatus 101 obtains the serving network identifier includes: The remote communication apparatus 101 receives a response message for the request message from the relay communication apparatus 103. The response message includes the serving network identifier.

In some embodiments, the request message includes a discovery request message that is in a proximity-based services discovery procedure model B and that is sent by the remote communication apparatus 101 to the relay communication apparatus 103. The discovery request message includes indication information used to request the serving network identifier. The request message further includes an additional parameters announcement request message sent by the remote communication apparatus 101 to the relay communication apparatus 103. The additional parameters announcement request message includes the indication information used to request the serving network identifier.

In some embodiments, the response message includes a response message defined for responding to the request message. The response message further includes a discovery response message in the proximity-based services discovery procedure model B. The response message further includes a relay discovery additional information message.

In some embodiments, that the remote communication apparatus 101 determines to request the serving network identifier from the relay communication apparatus 103 includes: The remote communication apparatus 101 determines, based on the authentication request information received from the relay communication apparatus 103, to request the serving network identifier. In some embodiments, that the remote communication apparatus 101 determines to request the serving network identifier is further based on: The remote communication apparatus 101 determines to compare whether the serving network identifier is the same as the network name information. That the remote communication apparatus 101 determines to request the serving network identifier is further based on: The remote communication apparatus 101 determines to establish the relay communication security link by using the control plane signaling.

In some embodiments, that the remote communication apparatus 101 receives the serving network identifier includes: The remote communication apparatus 101 receives, from the relay communication apparatus 103, a message defined for sending the serving network identifier. The message includes the serving network identifier. That the remote communication apparatus 101 receives the serving network identifier further includes: When the remote communication apparatus 101 and the relay communication apparatus 103 use a proximity-based services discovery procedure model A, the remote communication apparatus 101 receives a discovery announcement message from the relay communication apparatus 103. The discovery announcement message includes the serving network identifier. That the remote communication apparatus 101 receives the serving network identifier further includes: When the remote communication apparatus 101 and the relay communication apparatus 103 use the proximity-based services discovery procedure model B, the remote communication apparatus 101 receives a discovery response message from the relay communication apparatus 103. The discovery response message includes the serving network identifier. That the remote communication apparatus 101 receives the serving network identifier further includes: The remote communication apparatus 101 receives a relay discovery additional information message from the relay communication apparatus 103. The relay discovery additional information message includes the serving network identifier.

In some embodiments, the serving network identifier in the relay discovery additional information message includes a new radio cell global identifier NCGI.

In some embodiments, the serving network identifier includes a public land mobile network identifier PLMN ID of a serving network of the relay communication apparatus.

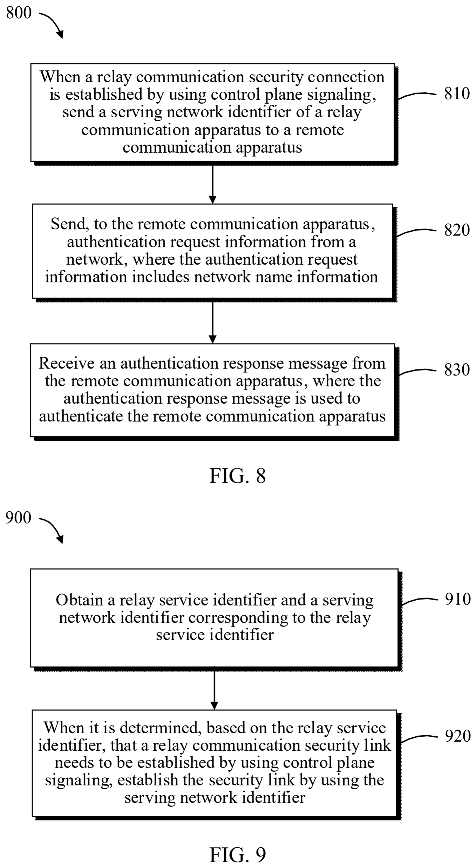

FIG. 8 is a flowchart of a communication method implemented at a relay communication apparatus according to an embodiment of this application, and corresponds to the communication method implemented by the relay communication apparatus 103 in FIG. 2A, FIG. 3, FIG. 4, and FIG. 5.

810: When a relay communication security link is established by using control plane signaling, the relay communication apparatus 103 sends a serving network identifier of the relay communication apparatus to a remote communication apparatus 101.

820: The relay communication apparatus 103 sends, to the remote communication apparatus 101, authentication request information from a network, where the authentication request information includes network name information.

830: The relay communication apparatus 103 receives an authentication response message from the remote communication apparatus 101, where the authentication response message is used to authenticate the remote communication apparatus.

In some embodiments, that the relay communication apparatus 103 sends the serving network identifier includes: The relay communication apparatus 103 sends, based on a request message for the serving network identifier received from the remote communication apparatus 101, a response message for the request message to the remote communication apparatus 101. The response message includes the serving network identifier.

In some embodiments, the request message includes a discovery request message in a proximity-based services discovery procedure model B. The discovery request message includes indication information used to request the serving network identifier. The request message further includes an additional parameters announcement request message. The additional parameters announcement request message includes the indication information used to request the serving network identifier.

In some embodiments, the response message includes a response message defined for responding to the request message. The response message further includes a discovery response message in the proximity-based services discovery procedure model B. The response message further includes a relay discovery additional information message.

In some embodiments, before sending the serving network identifier, the relay communication apparatus 103 determines, based on the relay communication security link established by using the control plane signaling, to send the serving network identifier to the remote communication apparatus 101.

In some embodiments, that the relay communication apparatus 103 sends the serving network identifier includes: The relay communication apparatus 103 sends, to the remote communication apparatus 101, a message defined for sending the serving network identifier. The message includes the serving network identifier. That the relay communication apparatus 103 sends the serving network identifier further includes: When the remote communication apparatus 101 and the relay communication apparatus 103 use a proximity-based services discovery procedure model A, the relay communication apparatus 103 broadcasts a discovery message. The discovery message includes the serving network identifier. That the relay communication apparatus 103 sends the serving network identifier further includes: When the remote communication apparatus 101 and the relay communication apparatus 103 use the proximity-based services discovery procedure model B, the relay communication apparatus 103 sends a discovery response message to the remote communication apparatus 101. The discovery response message includes the serving network identifier. That the relay communication apparatus 103 sends the serving network identifier further includes: The relay communication apparatus 103 sends a relay discovery additional information message to the remote communication apparatus 101. The relay discovery additional information message includes the serving network identifier.

In some embodiments, the serving network identifier in the relay discovery additional information message includes a new radio cell global identifier NCGI.

In some embodiments, the serving network identifier includes a public land mobile network identifier PLMN ID of a serving network of the relay communication apparatus.

FIG. 9 is a flowchart of a communication method implemented at a communication apparatus according to an embodiment of this application, and corresponds to the communication method implemented by the communication apparatus 105 in FIG. 2B and FIG. 6.

910: The communication apparatus 105 obtains a relay service identifier and a serving network identifier corresponding to the relay service identifier.

920: When the communication apparatus 105 determines, based on the relay service identifier, that a relay communication security link needs to be established by using control plane signaling, the communication apparatus 105 establishes the security link by using the serving network identifier. In some embodiments, that the communication apparatus 105 obtains the relay service identifier and the serving network identifier corresponding to the relay service identifier includes: The communication apparatus 105 obtains, from a network device, the relay service identifier and the serving network identifier corresponding to the relay service identifier.

In some embodiments, the communication apparatus 105 includes a remote communication apparatus 101 or a relay communication apparatus 103 in ProSe communication.

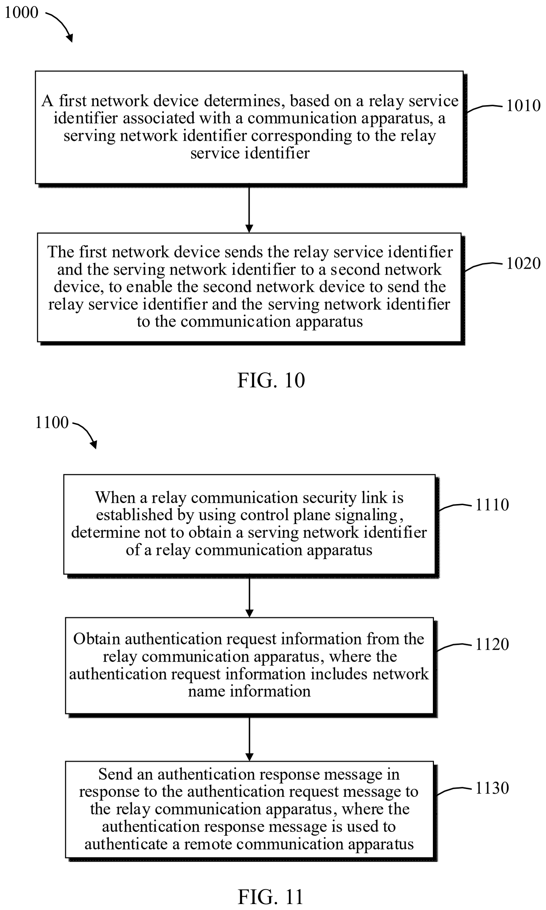

FIG. 10 is a flowchart of a communication method implemented at a network device according to an embodiment of this application, and corresponds to the communication method implemented by the first network device 107 and the second network device 109 in FIG. 2B.

1010: The first network device 107 determines, based on a relay service identifier associated with a communication apparatus 105, a serving network identifier corresponding to the relay service identifier.

1020: The first network device 107 sends the relay service identifier and the serving network identifier to the second network device 109, to enable the second network device 109 to send the relay service identifier and the serving network identifier to the communication apparatus 105. In some embodiments, the first network device 107 includes a policy control function PCF device, and the second network device 109 includes an access and mobility management AMF device. In some embodiments, the first network device 107 obtains service specific information in subscription information of the communication apparatus from a network storage device. The service specific information includes the serving network identifier.

In some embodiments, the network storage device includes a unified data management UDM device.

FIG. 11 is a flowchart of a communication method implemented at a remote communication apparatus according to an embodiment of this application, and corresponds to the communication method implemented by the remote communication apparatus 101 in FIG. 2C.

1110: When the remote communication apparatus 101 establishes a relay communication security link by using control plane signaling, the remote communication apparatus 101 determines not to obtain a serving network identifier of a relay communication apparatus 103.

1130: The remote communication apparatus 101 obtains authentication request information from the relay communication apparatus 103, where the authentication request information includes network name information.

1150: The remote communication apparatus 101 sends an authentication response message in response to the authentication request message to the relay communication apparatus 103, where the authentication response message is used to authenticate the remote communication apparatus 101.

In some embodiments, the remote communication apparatus 101 further obtains indication information from a network device. The indication information indicates the remote communication apparatus 101 not to obtain the serving network identifier of the relay communication apparatus 103.

In the foregoing embodiments provided in this application, the method provided in embodiments of this application is separately described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

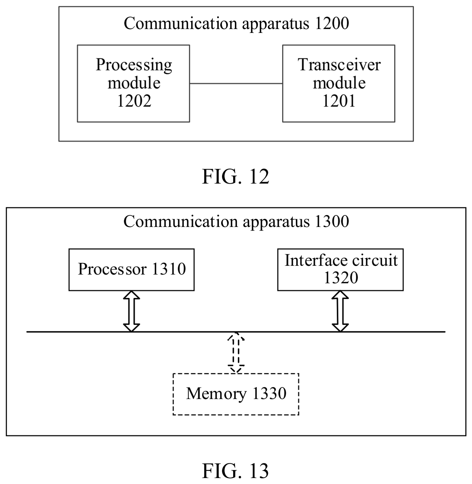

FIG. 12 and FIG. 13 are diagrams of structures of possible communication apparatuses according to embodiments of this application. The communication apparatuses may implement the functions of the terminal device or the network device in the foregoing method embodiments. Therefore, beneficial effect of the foregoing method embodiments can also be implemented. In this embodiment of this application, the communication apparatus 1200 may be the remote communication apparatus 101, the relay communication apparatus 103, the communication apparatus 105, the first network device 107, or the second network device 109 shown in FIG. 1A, FIG. 1B, or FIG. 1C, or may be a module (for example, a chip) used in the remote communication apparatus 101, the relay communication apparatus 103, the communication apparatus 105, the first network device 107, or the second network device 109.

As shown in FIG. 12, the communication apparatus 1200 includes a transceiver module 1201 and a processing module 1202. The communication apparatus 1200 may be configured to implement a function of the remote communication device 101 in the method embodiment shown in FIG. 2A. When the communication apparatus 1200 is configured to implement the function of the remote communication apparatus 101 in the method embodiment in FIG. 2A, the transceiver module 1201 is configured to: when a relay communication security link is established by using control plane signaling, obtain a serving network identifier of the relay communication apparatus 103. The transceiver module 1201 is further configured to obtain authentication request information from the relay communication apparatus 103. The authentication request information includes network name information. The transceiver module 1201 is further configured to: when determining that the serving network identifier is the same as the network name information, send an authentication response message in response to the authentication request message to the relay communication apparatus 103. The authentication response message is used to authenticate the remote communication apparatus.

When the communication apparatus 1200 is configured to implement a function of the relay communication apparatus 103 in the method embodiment in FIG. 2A, the transceiver module 1201 is configured to: when the relay communication security link is established by using the control plane signaling, send the serving network identifier of the relay communication apparatus 103 to the remote communication apparatus 101. The transceiver module 1201 is further configured to send, to the remote communication apparatus 101, authentication request information from a network. The authentication request information includes the network name information. The transceiver module 1201 is further configured to receive an authentication response message from the remote communication apparatus 101. The authentication response message is used to authenticate the remote communication apparatus.

When the communication apparatus 1200 is configured to implement a function of the communication apparatus 105 in the method embodiment in FIG. 2B, the transceiver module 1201 is configured to obtain a relay service identifier and a serving network identifier corresponding to the relay service identifier. The processing module 1202 is configured to: when determining, based on the relay service identifier, that the relay communication security link needs to be established by using the control plane signaling, establish the security link by using the serving network identifier.

When the communication apparatus 1200 is configured to implement functions of the first network device 107 and the second network device 109 in the method embodiment in FIG. 2B, the processing module 1202 is configured to determine, based on a relay service identifier associated with the communication apparatus, a serving network identifier corresponding to the relay service identifier. The transceiver module 1201 is configured to send the relay service identifier and the serving network identifier to the second network device 109, to enable the second network device 109 to send the relay service identifier and the serving network identifier to the communication apparatus 105.

When the communication apparatus 1200 is configured to implement a function of the remote communication apparatus 101 in the method embodiment in FIG. 2C, the processing module 1202 is configured to: when the remote communication apparatus 101 establishes the relay communication security link by using the control plane signaling, determine not to obtain the serving network identifier of the relay communication apparatus. The transceiver module 1201 is configured to obtain authentication request information from the relay communication apparatus 103. The authentication request information includes network name information. The transceiver module 1201 is further configured to send an authentication response message in response to the authentication request message to the relay communication apparatus 103. The authentication response message is used to authenticate the remote communication apparatus 101.

For more detailed descriptions of the transceiver module 1201 and the processing module 1202, refer to related descriptions in the foregoing method embodiments. Details are not described herein again.

As shown in FIG. 13, the communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to: store instructions to be executed by the processor 1310, store input data required by the processor 1310 to run instructions, or store data generated after the processor 1310 runs instructions. Optionally, the processor 1310 and the memory 1330 may be integrated into a system on chip (system on chip, SoC), for example, a chip, or another integrated apparatus. Optionally, the interface circuit 1120 may also be integrated into a system on chip SoC, for example, a chip, or another integrated apparatus.

When the communication apparatus 1300 is configured to implement the method in the foregoing method embodiments, the processor 1310 is configured to perform a function of the processing module 1202, and the interface circuit 1320 is configured to perform a function of the transceiver module 1201.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

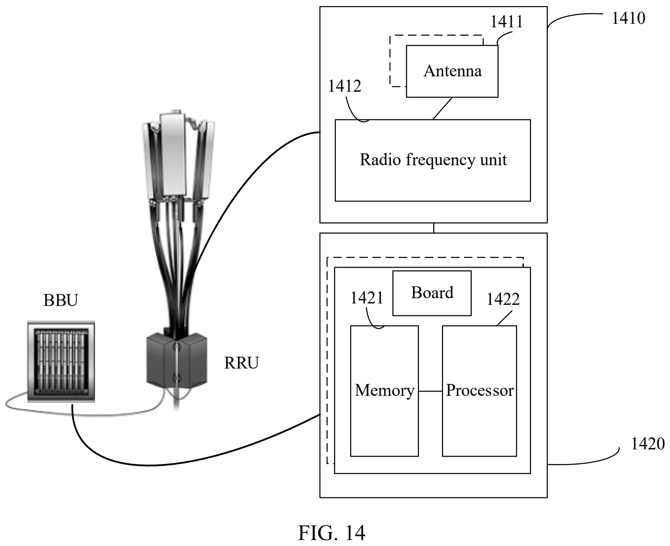

When the apparatus in this embodiment of this application is a network device, the apparatus may be as shown in FIG. 14. The apparatus may include one or more radio frequency units, such as a remote radio unit (remote radio unit, RRU) 1410 and one or more baseband units (baseband units, BBUs) (which may also be referred to as a digital unit (digital unit, DU)) 1420. The RRU 1410 may be referred to as a transceiver module. The transceiver module may include a sending module and a receiving module, or the transceiver module may be a module that can implement sending and receiving functions. The transceiver module may correspond to the transceiver module 1201 in FIG. 12, in other words, may perform an action performed by the transceiver module 1201. Optionally, the transceiver module may also be referred to as a transceiver machine, a transceiver circuit, a transceiver, or the like, and may include at least one antenna 1411 and a radio frequency unit 1412. The RRU 1410 is mainly configured to: receive and send a radio frequency signal and perform conversion between the radio frequency signal and a baseband signal. The BBU 1410 is mainly configured to: perform baseband processing, control a network device, and the like. The RRU 1410 and the BBU 1420 may be physically disposed together, or may be physically disposed separately, to be specific, the base station is a distributed base station.

The BBU 1420 is a control center of the base station, and may also be referred to as a processing module. The BBU 1420 may correspond to the processing module 1202 in FIG. 12, and is mainly configured to implement a baseband processing function, for example, channel coding, reuse, modulation, or spreading. In addition, the processing module may perform an action performed by the processing module 1002. For example, the BBU (the processing module) may be configured to control the base station to perform an operation procedure related to the network device in the foregoing method embodiments.

In an example, the BBU 1420 may include one or more boards, and a plurality of boards may jointly support a radio access network (for example, an LTE network) of a single access standard, or may separately support radio access networks (for example, an LTE network, a 5G network, or another network) of different access standards. The BBU 1420 further includes a memory 1421 and a processor 1422. The memory 1421 is configured to store necessary instructions and data. The processor 1422 is configured to control the base station to perform a necessary action, for example, is configured to control the base station to perform the operation procedures related to the network device in the foregoing method embodiments. The memory 1421 and the processor 1422 may serve the one or more boards. In other words, a memory and a processor may be separately disposed on each board. Alternatively, the plurality of boards may share a same memory and a same processor. In addition, a necessary circuit may be further disposed on each board.

An embodiment of this application provides a communication system. The communication system may include the remote communication apparatus, the relay communication apparatus, and the communication apparatus in the embodiments shown in FIG. 2A, FIG. 2B, and FIG. 2C, and include the network device in the embodiment shown in FIG. 2B. Optionally, the communication device and the network device in the communication system may perform the communication method shown in any one of FIG. 2A, FIG. 2B, and FIG. 2C.

An embodiment of this application further provides a circuit. The circuit may be coupled to a memory, and may be configured to perform a procedure related to the terminal device or the network device in any one of the foregoing method embodiments. A chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application. A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separate, and components displayed as modules may or may not be physical modules, may be located in one position, or may be distributed on a plurality of network units. Some or all of the units may be selected based on actual requirements to achieve the objectives of the solutions of embodiments. In addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The computer-readable storage medium may be any usable medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk or another optical disc storage, a disk storage medium or another magnetic storage device, or any other medium that can carry or store expected program code in a form of instructions or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". The terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), and finding. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, used in a process of establishing a relay communication connection, and comprising:
when a relay communication security link is established by using control plane signaling, obtaining, by a remote communication apparatus, a serving network identifier of a relay communication apparatus;
obtaining, by the remote communication apparatus, an authentication request message from the relay communication apparatus, wherein the authentication request message comprises network name information; and
comparing, by the remote communication apparatus, the network name information with the serving network identifier, and determining, based on a result of the comparison, whether to perform a subsequent authentication procedure.

2. The method according to claim 1, wherein the comparing, by the remote communication apparatus, the network name information with the serving network identifier, and determining, based on a result of the comparison, whether to perform a subsequent authentication procedure comprises:
when determining that the serving network identifier is consistent with the network name information, sending, by the remote communication apparatus to the relay communication apparatus, an authentication response message in response to the authentication request message, wherein the authentication response message is used to authenticate the remote communication apparatus.

3. The method according to claim 1 or 2, wherein the authentication request message is an extensible authentication protocol EAP request/authentication and key agreement AKA'-challenge message.

4. The method according to claim 3, wherein a network name item in AT_KDF_INPUT information of the EAP request/AKA'-challenge message comprises the network name information.

5. The method according to any one of claims 1 to 4, wherein the method further comprises:
before obtaining the serving network identifier, determining, by the remote communication apparatus, to request the serving network identifier from the relay communication apparatus; and
sending, by the remote communication apparatus to the relay communication apparatus, a request message for the serving network identifier.

6. The method according to claim 5, wherein the obtaining the serving network identifier comprises:
receiving, by the remote communication apparatus from the relay communication apparatus, a response message for the request message, wherein the response message comprises the serving network identifier.

7. The method according to claim 5, wherein the sending a request message comprises at least one of the following:
sending, by the remote communication apparatus to the relay communication apparatus, a discovery request message in a proximity-based services discovery procedure model B, wherein the discovery request message comprises indication information used to request the serving network identifier; or
sending, by the remote communication apparatus to the relay communication apparatus, an additional parameters announcement request message, wherein the additional parameters announcement request message comprises indication information used to request the serving network identifier.

8. The method according to claim 6, wherein the response message comprises at least one of the following:
a response message defined for responding to the request message;
a discovery response message in a proximity-based services discovery procedure model B; or
a relay discovery additional information message.

9. The method according to claim 5, wherein the determining to request the serving network identifier from the relay communication apparatus comprises:
determining, by the remote communication apparatus based on the authentication request information received from the relay communication apparatus, to request the serving network identifier.

10. The method according to claim 9, wherein the determining to request the serving network identifier is further based on at least one of the following:
determining, by the remote communication apparatus, that there is a need to compare whether the serving network identifier is consistent with the network name information; or
determining, by the remote communication apparatus, to establish the relay communication security link by using the control plane signaling.

11. The method according to claim 1, wherein the obtaining, by a remote communication apparatus, a serving network identifier of a relay communication apparatus comprises:
receiving, by the remote communication apparatus from the relay communication apparatus, a message defined for sending the serving network identifier, wherein the message comprises the serving network identifier.

12. The method according to claim 1, wherein the obtaining, by a remote communication apparatus, a serving network identifier of a relay communication apparatus comprises:
when the remote communication apparatus and the relay communication apparatus use a proximity-based services discovery procedure model A, receiving, by the remote communication apparatus, a discovery announcement message from the relay communication apparatus, wherein the discovery announcement message comprises the serving network identifier.

13. The method according to claim 1, wherein the obtaining, by a remote communication apparatus, a serving network identifier of a relay communication apparatus comprises:
when the remote communication apparatus and the relay communication apparatus use a proximity-based services discovery procedure model B, receiving, by the remote communication apparatus, a discovery response message from the relay communication apparatus, wherein the discovery response message comprises the serving network identifier.

14. The method according to claim 1, wherein the obtaining, by a remote communication apparatus, a serving network identifier of a relay communication apparatus comprises:
receiving, by the remote communication apparatus, a relay discovery additional information message from the relay communication apparatus, wherein the relay discovery additional information message comprises the serving network identifier.

15. The method according to any one of claims 1 to 14, wherein the serving network identifier comprises:
a public land mobile network identifier PLMN ID of a serving network of the relay communication apparatus.

16. The method according to claim 15, wherein the PLMN ID is comprised in a new radio cell global identifier NCGI.

17. A communication method, used in a process of establishing a relay communication connection, and comprising:
when a relay communication security link is established by using control plane signaling, sending, by a relay communication apparatus, a serving network identifier of the relay communication apparatus to a remote communication apparatus;
sending, by the relay communication apparatus to the remote communication apparatus, an authentication request message from a network, wherein the authentication request message comprises network name information; and
receiving, by the relay communication apparatus, an authentication response message from the remote communication apparatus, wherein the authentication response message is used to authenticate the remote communication apparatus.

18. The method according to claim 17, wherein the authentication request message is an extensible authentication protocol EAP request/authentication and key agreement AKA'-challenge message.

19. The method according to claim 18, wherein a network name item in AT _KDF_INPUT information of the EAP request/AKA'-challenge message comprises the network name information.

20. The method according to claim 17, wherein the sending a serving network identifier comprises:
sending, by the relay communication apparatus based on a request message for the serving network identifier received from the remote communication apparatus, a response message for the request message to the remote communication apparatus, wherein the response message comprises the serving network identifier.

21. The method according to claim 20, wherein the request message comprises at least one of the following:
a discovery request message in a proximity-based services discovery procedure model B, wherein the discovery request message comprises indication information used to request the serving network identifier; or
an additional parameters announcement request message, wherein the additional parameters announcement request message comprises indication information used to request the serving network identifier.

22. The method according to claim 20 or 21, wherein the response message comprises at least one of the following:
a response message defined for responding to the request message;
a discovery response message in the proximity-based services discovery procedure model B; or
a relay discovery additional information message.

23. The method according to claim 17, wherein the method further comprises:
before sending the serving network identifier, determining, by the relay communication apparatus based on the relay communication security link established by using the control plane signaling, to send the serving network identifier to the remote communication apparatus.

24. The method according to claim 17, wherein the sending a serving network identifier comprises:
sending, by the relay communication apparatus to the remote communication apparatus, a message defined for sending the serving network identifier, wherein the message comprises the serving network identifier.

25. The method according to claim 17, wherein the sending a serving network identifier comprises:
when the remote communication apparatus and the relay communication apparatus use a proximity-based services discovery procedure model A, broadcasting, by the relay communication apparatus, a discovery announcement message, wherein the discovery announcement message comprises the serving network identifier.

26. The method according to claim 17, wherein the sending a serving network identifier comprises:
when the remote communication apparatus and the relay communication apparatus use a proximity-based services discovery procedure model B, sending, by the relay communication apparatus, a discovery response message to the remote communication apparatus, wherein the discovery response message comprises the serving network identifier.

27. The method according to claim 17, wherein the sending a serving network identifier comprises:
sending, by the relay communication apparatus, a relay discovery additional information message to the remote communication apparatus, wherein the relay discovery additional information message comprises the serving network identifier.

28. The method according to any one of claims 17 to 27, wherein the serving network identifier comprises a public land mobile network identifier PLMN ID of a serving network of the relay communication apparatus.

29. The method according to claim 28, wherein the PLMN ID is comprised in a new radio cell global identifier NCGI.

30. A communication method, used in a process of establishing a relay communication connection, and comprising:
obtaining, by a communication apparatus, a relay service identifier and a serving network identifier corresponding to the relay service identifier; and
when the communication apparatus determines, based on the relay service identifier, that a relay communication security link needs to be established by using control plane signaling, establishing, by the communication apparatus, the security link by using the serving network identifier.

31. The method according to claim 30, wherein
the obtaining a relay service identifier and a serving network identifier corresponding to the relay service identifier comprises:
obtaining, by the communication apparatus from a network device, the relay service identifier and the serving network identifier corresponding to the relay service identifier.

32. The method according to claim 30, wherein
the communication apparatus comprises a remote communication apparatus or a relay communication apparatus in ProSe communication.

33. A communication method, used in a process of establishing a relay communication connection, and comprising:
determining, by a first network device based on a relay service identifier associated with a communication apparatus, a serving network identifier corresponding to the relay service identifier; and
sending, by the first network device, the relay service identifier and the serving network identifier to a second network device, to enable the second network device to send the relay service identifier and the serving network identifier to the communication apparatus.

34. The method according to claim 33, wherein
the first network device comprises a policy control function PCF device; and
the second network device comprises an access and mobility management AMF device.

35. The method according to claim 33, further comprising:
obtaining, by the first network device, service specific information in subscription information of the communication apparatus from a network storage device, wherein
the service specific information comprises the serving network identifier.

36. The method according to claim 35, wherein
the network storage device comprises a unified data management UDM device.

37. A communication method, used in a process of establishing a relay communication connection, and comprising:
when a remote communication apparatus establishes a relay communication security link by using control plane signaling, determining, by the remote communication apparatus, not to obtain a serving network identifier of a relay communication apparatus;
obtaining, by the remote communication apparatus, authentication request information from the relay communication apparatus, wherein the authentication request information comprises network name information; and
sending, by the remote communication apparatus, an authentication response message in response to the authentication request message to the relay communication apparatus, wherein the authentication response message is used to authenticate the remote communication apparatus.

38. The method according to claim 37, further comprising:
obtaining, by the remote communication apparatus, indication information from a network device, wherein the indication information indicates the remote communication apparatus not to obtain the serving network identifier of the relay communication apparatus.

39. A remote communication apparatus, used in a process of establishing a relay communication connection, and comprising a transceiver module and a processing module, wherein
the transceiver module is configured to: when a relay communication security link is established by using control plane signaling, obtain a serving network identifier of a relay communication apparatus;
the transceiver module is further configured to obtain an authentication request message from the relay communication apparatus, wherein the authentication request message comprises network name information; and
the processing module is configured to: compare the network name information with the serving network identifier, and determine, based on a result of the comparison, whether to perform a subsequent authentication procedure.

40. The remote communication apparatus according to claim 39, wherein
the processing module is further configured to: when determining that the serving network identifier is consistent with the network name information, send an authentication response message in response to the authentication request message to the relay communication apparatus by using the transceiver module, wherein the authentication response message is used to authenticate the remote communication apparatus.

41. A relay communication apparatus, used in a process of establishing a relay communication connection, and comprising a transceiver module and a processing module, wherein
the transceiver module is configured to: when a relay communication security link is established by using control plane signaling, send a serving network identifier of the relay communication apparatus to a remote communication apparatus;
the transceiver module is further configured to send, to the remote communication apparatus, authentication request information from a network, wherein the authentication request information comprises network name information; and
the transceiver module is further configured to receive an authentication response message from the remote communication apparatus, wherein the authentication response message is used to authenticate the remote communication apparatus.

42. A communication apparatus, used in a process of establishing a relay communication connection, and comprising:
an obtaining module, configured to obtain a relay service identifier and a serving network identifier corresponding to the relay service identifier; and
a security link establishment module, configured to: when determining, based on the relay service identifier, that a relay communication security link needs to be established by using control plane signaling, establish the security link by using the serving network identifier.

43. A network, used in a process of establishing a relay communication connection, and comprising a first network device and a second network device, wherein
the first network device determines, based on a relay service identifier associated with a communication apparatus, a serving network identifier corresponding to the relay service identifier; and
the first network device sends the relay service identifier and the serving network identifier to the second network device, to enable the second network device to send the relay service identifier and the serving network identifier to the communication apparatus.

44. A remote communication apparatus, used in a process of establishing a relay communication connection, and comprising:
a determining module, configured to: when a relay communication security link is established by using control plane signaling, determine not to obtain a serving network identifier of a relay communication apparatus;
an obtaining module, configured to obtain authentication request information from the relay communication apparatus, wherein the authentication request information comprises network name information; and
a sending module, configured to send an authentication response message in response to the authentication request message to the relay communication apparatus, wherein the authentication response message is used to authenticate the remote communication apparatus.

45. A computer-readable storage medium, wherein the computer-readable storage medium stores instructions, and when the instructions are executed by an electronic device, the electronic device is enabled to perform the method according to any one of claims 1 to 38.

46. A computer program product, wherein the computer program product comprises instructions, and when the instructions are executed by an electronic device, the electronic device is enabled to perform the method according to any one of claims 1 to 38.

47. A communication apparatus, wherein the communication apparatus comprises a processor, and the processor is configured to execute instructions in a memory, to perform the method according to any one of claims 1 to 38.

48. A communication apparatus, wherein the communication apparatus comprises a unit or a module configured to perform the method according to any one of claims 1 to 38.
